# EUROPEAN PATENT APPLICATION

(11) **EP 4 845 236 A1**
(43) Date of publication of application: **25.11.2026**
(21) Application number: 24917631.4
(22) Date of filing: 15.01.2024
(51) Int. Cl.: H04W 52/02

(54) **COMMUNICATION METHOD AND APPARATUS**

(71) Applicant: Beijing Xiaomi Mobile Software Co., Ltd., Beijing 100085 (CN)
(72) Inventor: ZHAO, Li, Beijing 100085 (CN); JIANG, Xiaowei, Beijing 100085 (CN)
(74) Representative: Stöckeler, Ferdinand
(86) International application number: PCT/CN2024/072402
(87) International publication number: WO 2025/152003

(57) **Abstract**

Disclosed in embodiments of the present disclosure are a communication method and apparatus. The method comprises: a terminal determines that a first secondary cell (SCell) is a cell requesting a synchronization signal block (SSB) on demand; and the terminal requests a network device to send the SSB in the first SCell. By implementing the embodiments of the present disclosure, the problem of when a terminal and how to request a "cell requesting an SSB on demand" to send the SSB in a carrier aggregation scenario can be solved, so that the terminal can communicate with the cell requesting the SSB on demand.

## Description

### FIELD

The present disclosure relates to the field of communication technology, and in particular to a communication method and apparatus.

### BACKGROUND

With the gradual application of large-scale active antenna arrays and the large-scale construction of 5th generation (5G) mobile networks, the energy consumption of wireless communication networks has increased significantly. The cost growth for energy consumption even outstrips the revenue growth of operators. Therefore, network energy saving has become an important means for operators to reduce the operating costs of 5G systems.

### SUMMARY

Embodiments of the present disclosure provide a communication method and apparatus.

According to a first aspect of embodiments of the present disclosure, a communication method is provided, which is performed by a terminal and includes: determining that a first secondary cell (SCell) is a cell of which a synchronization signal block (SSB) is requested on demand (on-demand SSB SCell); and requesting a network device to send the SSB in the first SCell.

According to a second aspect of embodiments of the present disclosure, a communication method is provided, which is performed by a network device and includes: receiving second indication information sent by a terminal via a second cell. The second indication information is configured to instruct the network device to send a synchronization signal block (SSB) in a first secondary cell (SCell); and the first SCell is a cell of which an SSB is requested on demand (on-demand SSB SCell); and the second cell and the first SCell are aggregated in carriers.

According to a third aspect of embodiments of the present disclosure, a communication method is provided, which is performed by a network device and includes: receiving first information sent by a terminal in a first secondary cell (SCell). The first information is configured to instruct the network device to send a synchronization signal block (SSB) in the first SCell; and the first SCell is a cell of which an SSB is requested on demand (on-demand SSB SCell).

According to a fourth aspect of embodiments of the present disclosure, a terminal is provided, which includes: a processing module, configured to determine that a first secondary cell (SCell) is a cell of which a synchronization signal block (SSB) is requested on demand (on-demand SSB SCell); and a transceiver module, configured to request a network device to send the SSB in the first SCell.

According to a fifth aspect of embodiments of the present disclosure, a network device is provided, which includes: a transceiver module, configured to receive second indication information sent by a terminal via a second cell. The second indication information is configured to instruct the network device to send a synchronization signal block (SSB) in a first secondary cell (SCell); the first SCell is a cell of which an SSB is requested on demand (on-demand SSB SCell); and the second cell and the first SCell are aggregated in carriers.

According to a sixth aspect of embodiments of the present disclosure, a network device is provided, which includes: a transceiver module, configured to receive first information sent by a terminal in a first secondary cell (SCell). The first information is configured to instruct the network device to send a synchronization signal block (SSB) in the first SCell; and the first SCell is a cell of which an SSB is requested on demand (on-demand SSB SCell).

According to a seventh aspect of embodiments of the present disclosure, a communication system is provided, which includes: a terminal, configured to perform optional implementation manners of the above first aspect; and a network device, configured to perform optional implementation manners of the above second and third aspects.

According to an eighth aspect of embodiments of the present disclosure, a communication device is provided, which includes one or more processors. The processor is configured to call instructions to enable the communication device to perform optional implementation manners of the above first, second or third aspect.

According to a ninth aspect of embodiments of the present disclosure, a storage medium is provided, which has stored therein instructions that, when run on a communication device, cause the communication device to perform the optional implementation manners of the above first, second or third aspect.

With the technical solutions in the present disclosure, the problem of when and how the terminal requests SSB transmission in an "on-demand SSB SCell" in a carrier aggregation scenario is solved, so as to enable the terminal to communicate with the on-demand SSB SCell.

### BRIEF DESCRIPTION OF THE DRAWINGS

In order to more clearly illustrate the technical solutions according to embodiments of the present disclosure, drawings needed for the description of embodiments will be briefly introduced below. The drawings described below only involve some embodiments of the present disclosure and do not impose specific limitations on the protection scope of the present disclosure.
FIG. 1 is a schematic architectural diagram of a communication system according to embodiments of the present disclosure;
FIG. 2A is a schematic interactive diagram of a communication method according to embodiments of the present disclosure;
FIG. 2B is a schematic interactive diagram of a communication method according to embodiments of the present disclosure;
FIG. 2C is a schematic interactive diagram of a communication method according to embodiments of the present disclosure;
FIG. 2D is a schematic interactive diagram of a communication method according to embodiments of the present disclosure;
FIG. 3A is a schematic flowchart of a communication method according to embodiments of the present disclosure;
FIG. 3B is a schematic flowchart of a communication method according to embodiments of the present disclosure;
FIG. 3C is a schematic flowchart of a communication method according to embodiments of the present disclosure;
FIG. 3D is a schematic flowchart of a communication method according to embodiments of the present disclosure;
FIG. 3E is a schematic flowchart of a communication method according to embodiments of the present disclosure;
FIG. 4A is a schematic flowchart of a communication method according to embodiments of the present disclosure;
FIG. 4B is a schematic flowchart of a communication method according to embodiments of the present disclosure;
FIG. 4C is a schematic flowchart of a communication method according to embodiments of the present disclosure;
FIG. 4D is a schematic flowchart of a communication method according to embodiments of the present disclosure;
FIG. 4E is a schematic flowchart of a communication method according to embodiments of the present disclosure;
FIG. 4F is a schematic flowchart of a communication method according to embodiments of the present disclosure;
FIG. 5A is a schematic interactive diagram of a communication method according to embodiments of the present disclosure;
FIG. 5B is a schematic interactive diagram of a communication method according to embodiments of the present disclosure;
FIG. 6A is a schematic block diagram of a terminal according to embodiments of the present disclosure;
FIG. 6B is a schematic block diagram of a network device according to embodiments of the present disclosure;
FIG. 7A is a schematic block diagram of a communication device 7100 according to embodiments of the present disclosure; and
FIG. 7B is a schematic block diagram of a chip 7200 according to embodiments of the present disclosure.

### DETAILED DESCRIPTION

Embodiments of the present disclosure provide a communication method and apparatus.

In a first aspect, embodiments of the present disclosure provide a communication method, which is performed by a terminal and includes: determining that a first secondary cell (SCell) is a cell of which a synchronization signal block (SSB) is requested on demand (on-demand SSB SCell); and requesting a network device to send the SSB in the first SCell.

In the above embodiments, in a case where the terminal determines that a certain SCell is an on-demand SSB SCell, the terminal requests the network device to send the SSB in the SCell, which solves the problem of when and how the terminal requests SSB transmission in an "on-demand SSB SCell" in a carrier aggregation scenario, so as to enable the terminal to communicate with the on-demand SSB SCell.

In combination with some embodiments of the first aspect, in some embodiments, determining that the first SCell is the on-demand SSB SCell includes: determining, based on implementation of the terminal, that the first SCell is the on-demand SSB SCell.

In the above embodiments, it is possible to determine, based on implementation of the terminal, that a certain SCell is an on-demand SSB SCell, so that the terminal requests the network device to send the SSB in the SCell, which solves the problem of when and how the terminal requests SSB transmission in an "on-demand SSB SCell" in a carrier aggregation scenario, so as to enable the terminal to communicate with the on-demand SSB SCell.

In combination with some embodiments of the first aspect, in some embodiments, determining, based on implementation of the terminal, that the first SCell is the on-demand SSB SCell includes: determining that the first SCell is the on-demand SSB SCell, in a case where the SSB of the first SCell is not detected at a reception occasion of the SSB of the first SCell.

In the above embodiments, in the case where the SSB of the first SCell is not detected at the reception occasion of the SSB of the first SCell, it is considered that the SSB of the first SCell is not sent periodically, but needs to be required by the terminal on demand. That is, in this case, it may be determined that the first SCell is the on-demand SSB SCell.

In combination with some embodiments of the first aspect, in some embodiments, determining that the first SCell is the on-demand SSB SCell includes: receiving first indication information sent by the network device, where the first indication information is configured to indicate whether the first SCell is the on-demand SSB SCell; and determining, according to the first indication information, that the first SCell is the on-demand SSB SCell.

In the above embodiments, the network device may indicate whether a certain SCell is an on-demand SSB SCell, so that the terminal can determine according to the indication that the SCell is an on-demand SSB SCell, and then request the network device to send the SSB in the SCell, which solves the problem of when and how the terminal requests SSB transmission in an "on-demand SSB SCell" in a carrier aggregation scenario, so as to enable the terminal to communicate with the on-demand SSB SCell.

In combination with some embodiments of the first aspect, in some embodiments, the first indication information is a newly defined information element (IE), and the first indication information is included in one of: a serving cell common configuration (ServingCellConfigCommon); a serving cell configuration (ServingCellConfig); or an SCell configuration (ScellConfig).

In combination with some embodiments of the first aspect, in some embodiments, requesting the network device to send the SSB in the first SCell includes: sending second indication information to the network device via a second cell. The second indication information is configured to instruct the network device to send the SSB in the first SCell; and the second cell and the first SCell are aggregated in carriers.

In the above embodiments, the terminal may send the second indication information to the network device via the second cell, so as to make the network device send the SSB in the first SCell (i.e., the on-demand SSB SCell determined by the terminal), which solves the problem of when and how the terminal requests SSB transmission in an "on-demand SSB SCell" in a carrier aggregation scenario, so as to enable the terminal to communicate with the on-demand SSB SCell.

In combination with some embodiments of the first aspect, in some embodiments, the method further includes: receiving a first radio resource control (RRC) signaling sent by the network device, where the first RRC signaling indicates at least one SCell. Sending the second indication information to the network device via the second cell includes: sending the second indication information to the network device via the second cell, in a case where the at least one SCell includes the first SCell.

In combination with some embodiments of the first aspect, in some embodiments, the first RRC signaling is an SCell addition and/or modification signaling.

In the above embodiments, when receiving an RRC signaling for SCell addition and/or modification, the terminal indicates to the network device through the second indication information that SSB transmission in the SCell (i.e., the on-demand SSB SCell determined by the terminal) is needed, which solves the problem of when and how the terminal requests SSB transmission in an "on-demand SSB SCell" in a carrier aggregation scenario, so as to enable the terminal to communicate with the on-demand SSB SCell.

In combination with some embodiments of the first aspect, in some embodiments, the second indication information is a second RRC signaling, the second RRC signaling includes respective identifiers of one or more SCells of the at least one SCell and/or respective SSB request indications for the one or more SCells; the one or more SCells are included in the at least one SCell; and the one or more SCells include the first SCell.

In combination with some embodiments of the first aspect, in some embodiments, the second indication information is a media access control-control element (MAC-CE). The MAC-CE includes a first bitmap indicating whether SSB transmission in a corresponding SCell is requested, the first bitmap includes one or more first indication bits, the one or more first indication bits each indicate whether SSB transmission in a respective SCell is requested, and the one or more first indication bits have a one-to-one correspondence with the at least one SCell. Alternatively, the MAC-CE includes a second bitmap indicating whether SSB transmission in one or more third cells is requested, the second bitmap includes one or more second indication bits, the one or more second indication bits each indicate whether SSB transmission in a respective third cell is requested, the one or more second indication bits have a one-to-one correspondence with the one or more third cells, the one or more third cells are one or more on-demand SSB SCells among the at least one SCell, and the one or more third cells include the first SCell.

In combination with some embodiments of the first aspect, in some embodiments, the method further includes: receiving an SCell activation/deactivation MAC CE sent by the network device. The SCell activation/deactivation MAC CE includes, for each SCell of at least one SCell, an activation/deactivation indication bit. Sending the second indication information to the network device via the second cell includes: sending the second indication information to the network device via the second cell, in a case where the at least one SCell includes the first SCell, and the first SCell is an activated SCell.

In the above embodiments, when receiving the SCell activation/deactivation MAC CE, the terminal indicates to the network device through the second indication information that SSB transmission in the SCell (i.e., the on-demand SSB SCell determined by the terminal) is needed, which solves the problem of when and how the terminal requests SSB transmission in an "on-demand SSB SCell" in a carrier aggregation scenario, so as to enable the terminal to communicate with the on-demand SSB SCell.

In combination with some embodiments of the first aspect, in some embodiments, sending the second indication information to the network device via the second cell includes: determining that time-frequency synchronization with the first SCell is needed; and sending the second indication information to the network device via the second cell.

In the above embodiments, in a case where time-frequency synchronization with the SCell (i.e., the on-demand SSB SCell) is needed, the terminal indicates to the network device through the second indication information that SSB transmission in the SCell is needed, which solves the problem of when and how the terminal requests SSB transmission in an "on-demand SSB SCell" in a carrier aggregation scenario, so as to enable the terminal to communicate with the on-demand SSB SCell.

In combination with some embodiments of the first aspect, in some embodiments, sending the second indication information to the network device via the second cell includes: determining that layer 1/layer 3 measurement on the first SCell is needed; and sending the second indication information to the network device via the second cell.

In the above embodiments, in a case where layer 1/layer 3 measurement on the SCell (i.e., the on-demand SSB SCell) is needed, the terminal indicates to the network device through the second indication information that SSB transmission in the SCell is needed, which solves the problem of when and how the terminal requests SSB transmission in an "on-demand SSB SCell" in a carrier aggregation scenario, so as to enable the terminal to communicate with the on-demand SSB SCell.

In combination with some embodiments of the first aspect, in some embodiments, requesting the network device to send the SSB in the first SCell includes: sending first information to the network device in the first SCell, and the first information is configured to instruct the network device to send the SSB in the first SCell.

In the above embodiments, the terminal may use the SCell (i.e., the on-demand SSB SCell determined by the terminal) to request the SSB transmission in the SCell, which solves the problem of when and how the terminal requests SSB transmission in an "on-demand SSB SCell" in a carrier aggregation scenario, so as to enable the terminal to communicate with the on-demand SSB SCell.

In combination with some embodiments of the first aspect, in some embodiments, the method further includes: obtaining a configuration of the first information associated with the first SCell from a system information block (SIB) or a dedicated radio resource control (RRC) signaling.

In combination with some embodiments of the first aspect, in some embodiments, sending the first information to the network device includes: sending the first information to the network device according to the configuration of the first information associated with the first SCell.

In combination with some embodiments of the first aspect, in some embodiments, the configuration of the first information associated with the first SCell includes at least one of: an initial transmission power of the first information or a parameter for calculating an initial transmission power; a power increasing step size of the first information; a maximum number of times the first information is sent; a preamble index or sequence reserved for the first information; configuration information of a random access occasion (RO) resource for sending the first information; or a configuration of a timer, where the timer is configured to indicate a duration for which the terminal monitors the SSB sent in the first SCell, and configured for the terminal to determine whether to resend the first information.

In combination with some embodiments of the first aspect, in some embodiments, the method further includes: receiving a random access response media access control protocol data unit (MAC PDU) including a header with a random access preamble identifier (RAPID) of the preamble index or sequence, and determining that the network device acknowledges a request for the SSB in the first SCell.

In a second aspect, embodiments of the present disclosure provide a communication method, which is performed by a network device and includes: receiving second indication information sent by a terminal via a second cell. The second indication information is configured to instruct the network device to send a synchronization signal block (SSB) in a first secondary cell (SCell); the first SCell is a cell of which an SSB is requested on demand (on-demand SSB SCell); and the second cell and the first SCell are aggregated in carriers.

In combination with some embodiments of the second aspect, in some embodiments, the method further includes sending a first RRC signaling, the first RRC signaling indicates at least one SCell, and the at least one SCell includes the first SCell.

In combination with some embodiments of the second aspect, in some embodiments, the first RRC signaling is an SCell addition and/or modification signaling.

In combination with some embodiments of the second aspect, in some embodiments, the second indication information is a second RRC signaling, the second RRC signaling includes respective identifiers of one or more SCells of the at least one SCell and/or respective SSB request indications for the one or more SCells; the one or more SCells are included in the at least one SCell; and the one or more SCells include the first SCell.

In combination with some embodiments of the second aspect, in some embodiments, the first SCell is an added and/or modified SCell, and the second indication information is a media access control-control element (MAC-CE). The MAC-CE includes a first bitmap indicating whether SSB transmission in a corresponding SCell is requested, the first bitmap includes one or more first indication bits, the one or more first indication bits each indicate whether SSB transmission in a respective SCell is requested, and the one or more first indication bits have a one-to-one correspondence with the at least one SCell. Alternatively, the MAC-CE includes a second bitmap indicating whether SSB transmission in one or more third cells is requested, the second bitmap includes one or more second indication bits, the one or more second indication bits each indicate whether SSB transmission in a respective third cell is requested, the one or more second indication bits have a one-to-one correspondence with the one or more third cells, the one or more third cells are one or more on-demand SSB SCells among the at least one SCell, and the one or more third cells include the first SCell.

In combination with some embodiments of the second aspect, in some embodiments, the method further includes sending an SCell activation/deactivation MAC CE, the SCell activation/deactivation MAC CE includes, for each SCell of at least one SCell, an activation/deactivation indication bit; and the at least one SCell includes the first SCell.

In combination with some embodiments of the second aspect, in some embodiments, the first SCell associated in the second indication information is an SCell with which time-frequency synchronization is needed; or the first SCell associated in the second indication information is an SCell on which layer 1/layer 3 measurement is needed.

In combination with some embodiments of the second aspect, in some embodiments, the method further includes sending first indication information to the terminal, the first indication information indicates whether the first SCell is the on-demand SSB SCell; and the first indication information is configured for the terminal to determine that the first SCell is the on-demand SSB SCell.

In combination with some embodiments of the second aspect, in some embodiments, the first indication information is a newly defined information element (IE), and the first indication information is included in one of: a serving cell common configuration (ServingCellConfigCommon); a serving cell configuration (ServingCellConfig); or an SCell configuration (ScellConfig).

In a third aspect, embodiments of the present disclosure provide a communication method, which is performed by a network device and includes receiving first information sent by a terminal in a first secondary cell (SCell), the first information is configured to instruct the network device to send a synchronization signal block (SSB) in the first SCell; and the first SCell is a cell of which an SSB is requested on demand (on-demand SSB SCell).

In combination with some embodiments of the third aspect, in some embodiments, the method further includes: sending a system information block (SIB) or a dedicated radio resource control (RRC) signaling, and the SIB or the dedicated RRC signaling includes a configuration of the first information associated with the first SCell.

In combination with some embodiments of the third aspect, in some embodiments, the configuration of the first information associated with the first SCell includes at least one of: an initial transmission power of the first information or a parameter for calculating an initial transmission power; a power increasing step size of the first information; a maximum number of times the first information is sent; a preamble index or sequence reserved for the first information; configuration information of a random access occasion (RO) resource for sending the first information; or a configuration of a timer, where the timer is configured to indicate a duration for which the terminal monitors the SSB sent in the first SCell, and configured for the terminal to determine whether to resend the first information.

In combination with some embodiments of the third aspect, in some embodiments, the method further includes: sending a random access response media access control protocol data unit (MAC PDU) to the terminal, and the random access response MAC PDU includes a header with a random access preamble identifier (RAPID) of the preamble index or sequence.

In a fourth aspect, embodiments of the present disclosure provide a terminal, which includes at least one of a transceiver module or a processing module; and the terminal is configured to perform optional implementation manners of the first aspect.

In a fifth aspect, embodiments of the present disclosure provide a network device, which includes at least one of a transceiver module or a processing module; and the network device is configured to perform optional implementation manners of the second aspect.

In a sixth aspect, embodiments of the present disclosure provide a network device, which includes at least one of a transceiver module or a processing module; and the network device is configured to perform optional implementation manners of the third aspect.

In a seventh aspect, embodiments of the present disclosure provide a communication system, which includes: a terminal configured to perform optional implementation manners of the above first aspect; and a network device configured to perform optional implementation manners of the above second or third aspect.

In an eighth aspect, embodiments of the present disclosure provide a communication device, which includes one or more processors; and the processor is configured to call instructions to enable the communication device to perform optional implementation manners of the above first aspect.

In a ninth aspect, embodiments of the present disclosure provide a communication device, which includes one or more processors; and the processor is configured to call instructions to enable the communication device to perform optional implementation manners of the above second aspect.

In a tenth aspect, embodiments of the present disclosure provide a communication device, which includes one or more processors; and the processor is configured to call instructions to enable the communication device to perform optional implementation manners of the above third aspect.

In an eleventh aspect, embodiments of the present disclosure provide a storage medium, which has stored therein instructions that, when run on a communication device, cause the communication device to perform optional implementation manners of the above first and second aspects.

In a twelfth aspect, embodiments of the present disclosure provide a program product that, when executed by a communication device, causes the communication device to perform the method as described in optional implementation manners of the first, second and third aspects.

In a thirteenth aspect, embodiments of the present disclosure provide a computer program that, when run on a computer, causes the computer to perform the method as described in optional implementation manners of the first, second and third aspects.

In a fourteenth aspect, embodiments of the present disclosure provide a chip or a chip system; the chip or chip system includes a processing circuit configured to perform the method as described in optional implementation manners of the first, second and third aspects.

It is understandable that the above-described terminal, network device, communication system, storage medium, program product, computer program, chip or chip system are each configured to perform the method according to embodiments of the present disclosure. Therefore, for beneficial effects that are achievable by them, reference may be made to that achieved by the respective methods, which will not be elaborated here.

Embodiments of the present disclosure provide a communication method and an apparatus therefor. In some embodiments, terms like "information processing method" and "communication method" are interchangeable, terms like "information processing device" and "communication device" are interchangeable, and terms "information processing system" and "communication system" are interchangeable.

The embodiments of the present disclosure are not exhaustive, but are some examples of the present disclosure, and are not intended to constitute a limitation on the scope of protection of the present disclosure. In the absence of contradiction, each step in a certain embodiment may be implemented as an independent embodiment, and various steps may be arbitrarily combined. For example, a solution obtained after removing one or more steps from a certain embodiment may also be implemented as an independent embodiment, and steps in a certain embodiment may be arbitrarily exchanged in order. In addition, optional implementation manners in a certain embodiment may be arbitrarily combined. In addition, various embodiments may be arbitrarily combined, for example, some or all of the steps of different embodiments may be arbitrarily combined, and a certain embodiment may be arbitrarily combined with an optional implementation manner of other embodiments.

In various embodiments of the present disclosure, unless specified otherwise or there is a logical conflict, terms and/or descriptions among various embodiments are of consistency and may be referenced to each other, and technical features in different embodiments may be combined to form a new embodiment based on their internal logical relationships.

Terms used in embodiments of the present disclosure are for the purpose of describing specific embodiments and are not intended to limit the present disclosure.

In embodiments of the present disclosure, unless specified otherwise, an element expressed in the singular form, such as expressed with words like "a", "an", "the", "described above", "said", "aforementioned", "this", etc., may mean "one and only one", or mean "one or more", "at least one", etc. For example, a noun after an article like "a", "an", "the" in English may be understood as a singular expression or a plural expression.

In embodiments of the present disclosure, "a plurality of" refers to two or more.

In some embodiments, phrases like "at least one", "at least one of", "one or more", "a plurality of", "multiple", etc. may be used interchangeably.

In some embodiments, expressions like "at least one of A or B", "A and/or B", "A in a case, B in another case", "A in response to a case, B in response to another case", etc., may include the following technical solutions depending on situations: A in some embodiments (A is performed independently of B); B in some embodiments (B is performed independently of A); in some embodiments, selection is made from A and B (A and B are selectively performed); both A and B in some embodiments (both A and B are performed). The same applies when there are more branches such as A, B, and C.

In some embodiments, the expression "A or B" may include the following technical solutions depending on situations: A in some embodiments (A is performed independently of B); B in some embodiments (B is performed independently of A); in some embodiments, selection is made from A and B (A and B are selectively performed). The same applies when there are more branches such as A, B, and C.

The prefixes such as "first" and "second" in embodiments of the present disclosure are used to distinguish different objects described, and do not constitute restrictions on the position, order, priority, quantity or content of the described objects. The statement for the described objects refers to the description in the context of the claims or embodiments, and the use of prefixes should not bring unnecessary restrictions. For example, if the described objects are "fields", such as "first field" and "second field", the ordinal numbers, i.e., "first" and "second", before these "fields" do not limit positions or order of these "fields", and the "first" and "second" do not limit whether the "fields" they define are in the same message, nor do they limit the order of the "first field" and the "second field". For another example, if the described objects are "levels", such as "first level" and "second level", the ordinal numbers before these "levels" do not limit the priority between these "levels". For another example, the number of the described object is not limited by the ordinal number, the number of the described object may be one or more. Taking "first apparatus" as an example, the number of the "apparatus" may be one or more. In addition, the objects defined by different prefixes may be the same or different. For example, if the described object is "apparatus", then "first apparatus" and "second apparatus" may be the same apparatus or different apparatuses, and their types may be the same or different. For another example, if the described object is "information", then "first information" and "second information" may be the same information or different information, and their contents may be the same or different.

In some embodiments, "including A", "comprising A", "used to indicate A", and "carrying A" may be interpreted as "directly carrying A" or "indirectly indicating A".

In some embodiments, terms such as "time/frequency" and "time/frequency domain" refer to time domain and/or frequency domain.

In some embodiments, phrases such as "in response to...", "in response to determining...", "in a case where...", "in case of...", "upon...", "when...", "if...", etc. may be used interchangeably.

In some embodiments, terms such as "greater than", "greater than or equal to", "not less than", "more than", "more than or equal to", "not less than", "higher than", "higher than or equal to", "not lower than", and "above" may be replaced with each other, and terms such as "smaller than", "smaller than or equal to", "not greater than", "less than", "less than or equal to", "no more than", "lower than", "lower than or equal to", "not higher than", and "below" may be replaced with each other.

In some embodiments, an apparatus, device or the like may be interpreted as physical or virtual, and their names are not limited to those recorded in embodiments, and in some cases, they may also be understood as "apparatus", "equipment", "device", "circuit", "network element", "node", "function", "unit", "section", "system", "network", "chip", "chip system", "entity", "body", and so on.

In some embodiments, "network" may be interpreted as the devices included in the network, for example, access network device, core network device, etc.

In some embodiments, "access network device (AN device)" may also be referred to as "radio access network device (RAN device)", "base station (BS)", "radio base station", or "fixed station", and in some embodiments, it may also be understood as "node", "access point", "transmission point (TP)", "reception point (RP)", "transmission/reception point (TRP)", "panel (panel)", "antenna panel", "antenna array", "cell", "macro cell", "small cell", "femto cell", "pico cell", "sector", "cell group", "serving cell", "carrier", "component carrier", "bandwidth part (BWP)" and the like.

In some embodiments, "terminal" or "terminal device" may also be referred to as "user equipment (UE)", "user terminal" "mobile station (MS)", "mobile terminal (MT)", subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client and the like.

In some embodiments, acquisition of data, information, etc. may comply with the laws and regulations of the country where the activity takes place.

In some embodiments, data, information, etc. may be obtained with the user's consent.

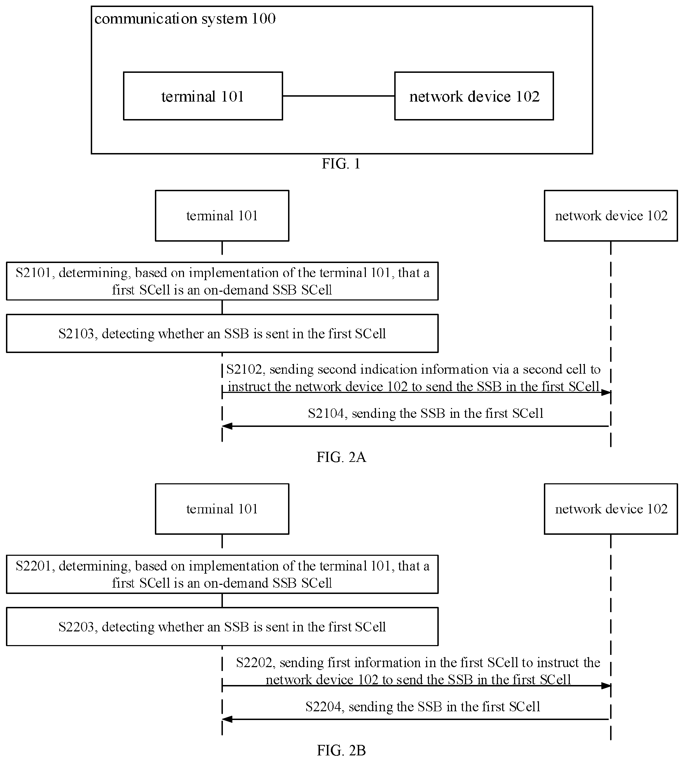

FIG. 1 is a schematic architectural diagram of a communication system according to embodiments of the present disclosure. The communication system may include, but is not limited to, a terminal and a network device. The number and form of each kind of device shown in FIG. 1 are used as examples only, but do not limit the embodiments of the present disclosure. In practice, two or more terminals and two or more network devices may be included. As an example, the communication system 100 shown in FIG. 1 includes one terminal 101 and one network device 102.

In some embodiments, the terminal 101 herein may be an entity at a user side for receiving or transmitting signals, such as a mobile phone. It may also be referred to as a terminal device, user equipment (UE), a mobile station (MS), a mobile terminal (MT), etc. The terminal may be at least one of a car with a communication function, a smart car, a mobile phone, a wearable device, a tablet computer (Pad), a computer with a wireless transceiver function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc. In embodiments of the present disclosure, the specific technology and device form adopted by the terminal are not limited.

In some embodiments, the network device 102 may be a network device associated with a first secondary cell (SCell) as described herein. Association of the network device 102 with the first SCell may refer to that the network device 102 sends and/or receives information or signals in the first SCell. The network device 102 may also be a network device associated with a second cell as described herein. Association of the network device 102 with the second SCell may refer to that the network device 102 sends and/or receives information or signals in the second SCell.

In some embodiments, the second cell and the first SCell are aggregated in carriers, or in other words, there is a carrier aggregation relationship between the second cell and the first SCell. In some embodiments, the second cell may be a primary cell corresponding to the first SCell, or the second cell and the first SCell may have an overlapping coverage region, or the coverage region of the second cell is adjacent to the coverage region of first SCell, that is, the second cell and the first SCell are neighboring cells. For example, the second cell may also be another normal SCell, or the second cell may also be an NES cell of which an SSB has already been acquired by the terminal.

In some embodiments, the network device 102 may be an access network device. In some embodiments, the access network device is for example a node or device that connects a terminal to a wireless network. The access network device may include, but is not limited, at least one of an evolved NodeB (eNB), a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU) or a mobile switching center in a 5G communication system, a base station, an open base station (Open RAN) or a cloud base station (Cloud RAN) in a 6G communication system, a base station in other communication systems, or an access node in a Wi-Fi system.

In some embodiments, the technical solutions of the present disclosure are applicable to an Open RAN architecture. In this case, interfaces between access network devices or within an access network device involved in embodiments of the present disclosure may be internal interfaces of the Open RAN, and the processes and information exchange between these internal interfaces may be implemented through software or programs.

In some embodiments, the access network device may be composed of a central unit (CU) and distributed units (DUs), where the CU may also be referred to as a control unit. The CU-DU structure allows to split protocol layers of the access network device, functions of some protocol layers are set in the CU for centralized control, functions of some or all of the remaining protocol layers are distributed in DUs, and the DUs are centrally controlled by the CU, but the present disclosure is not limited thereto.

It may be understood that the communication system described in embodiments of the present disclosure is for the purpose of more clearly illustrating technical solutions of embodiments of the present disclosure, and does not constitute a limitation on the technical solutions proposed in embodiments of the present disclosure. A person of ordinary skill in the art knows that with the evolution of the system architecture and the emergence of new service scenarios, the technical solutions proposed in embodiments of the present disclosure are also applicable to similar technical problems.

The following embodiments of the present disclosure may be applied to a communication system 100 or some of entities shown in FIG. 1, but are not limited thereto. The entities shown in FIG. 1 are examples, and the communication system may include all or part of the entities in FIG. 1, or may include other entities not shown in FIG. 1, and the number and form of each kind of entity are arbitrary. Various entities may be either physical or virtual, and the connection relationship among various entities is an example, these entities may be connected or disconnected with each other, and the connection may be in any manner, either a direct connection or an indirect connection, or either a wired connection or a wireless connection.

Various embodiments of the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), Future Radio Access (FRA), New Radio Access Technology (RAT), New Radio (NR), New radio access (NX), Future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), Public Land Mobile Network (PLMN) network, Device-to-Device (D2D) system, Machine-to-Machine (M2M) system, Internet of Things (IoT) system, Vehicle-to-Everything (V2X), systems using other communication methods, next-generation systems expanded based thereon, etc. In addition, multiple systems may be combined (for example, a combination of LTE or LTE-A and 5G) for application.

It should be noted that, with the increasing demand for speed, latency, high-speed mobility, and energy efficiency, as well as the diversity and complexity of future services, the 3GPP (3rd Generation Partnership Project) international standards organization has initiated the research and development of 5G. The main application scenarios of 5G include: Enhanced Mobile Broadband (eMBB), Ultra-Reliable Low-Latency Communications (URLLC), and Massive Machine Type Communication (mMTC). The eMBB still focuses on providing users with multimedia content, services, and data, and demand for it is growing rapidly. On the other hand, since eMBB may be deployed in diverse scenarios, such as indoors, in urban areas, or in rural areas, there are significant differences in its capabilities and requirements, so in-depth analysis must be conducted based on specific deployment scenarios. Typical applications of URLLC include: industrial automation, power automation, remote medical operations (surgery), traffic safety, etc. Typical characteristics of mMTC include: high connection density, small data volume, latency-insensitive services, low module costs, long service life, etc.

Since the energy consumption of a 5G base station is four times that of an LTE base station, network energy saving is an important means for operators to reduce the cost for operating 5G systems. In some embodiments, to save energy for a terminal in an RRC connected state (RRC_CONNECTED), a wake-up signal (WUS) is introduced. A duration for sending a WUS signal is defined at an offset before the on duration of UE C-DRX (Connected Discontinuous Reception). Within this WUS duration, the WUS signal, i.e., DCI 2-6, is sent, and the WUS signal is scrambled by PS-RNTI (Power Saving RNTI) to indicate whether the terminal wakes up to monitor PDCCH (Physical Downlink Control Channel) during the next UE C-DRX onduration.

In some embodiments, to save energy for a terminal in RRC_IDLE/INACTIVE, a paging wake-up signal (paging WUS) is introduced. That is, the paging WUS, i.e., a paging early indication (PEI), begins to be sent at a certain moment before a paging occasion (PO) to instruct the terminal whether to monitor paging scheduling information at that PO. The paging WUS includes DCI 2-7, and is scrambled by a paging early indication-radio network temporary identifier (PEI-RNTI).

In some embodiments, network energy saving (NES) already supports an SSB-less SCell in an inter-band CA scenario. The SSB-less SCell does not send an SSB. A terminal uses an SSB of a primary cell (PCell) to implement time-frequency synchronization with the SCell, L1/L3 (Layer 1/Layer 3) measurement on the SCell, and SCell activation, etc. However, SSB-less in the inter-band CA scenario has many limitations, for example, the PCell and SCell are co-located and can only operate in frequency band FR1. Frequency band FR2 and non-colocation scenarios are not supported.

In some embodiments, R19 NES supports FR2 and non-colocation scenarios, and on-demand SSB may be used as an enhancement to SSB transmission in scenarios not covered by SSB-less operation to achieve network element gain and ensure appropriate/enhanced SCell functions, including time/frequency synchronization, L1/L3 measurement and SCell activation. If the terminal needs to obtain the SSB of an on-demand SSB SCell, the terminal may use an UL WUS to request the SSB from the on-demand SSB SCell. In other words, the SSB of the SCell is sent in response to a request, or the SSB of the SCell is requested on demand.

In the carrier aggregation scenario, the SSB of the on-demand SSB SCell may be sent in response to the terminal's request. However, under what conditions and how the terminal should request SSB transmission in an on-demand SSB SCell is a question that needs to be handled.

In view of above, embodiments of the present disclosure provide a communication method and an apparatus therefor, which solves the problem of when and how the terminal requests SSB transmission in an "on-demand SSB SCell" in a carrier aggregation scenario, so as to enable the terminal to communicate with the on-demand SSB SCell.

FIG. 2A is a schematic interactive diagram of a communication method according to embodiments of the present disclosure. As shown in FIG. 2A, the communication method according to embodiments of the present disclosure may be applied to the communication system 100, and the method includes, but is not limited to, the following steps.

In step S2101, a terminal 101 determines, based on implementation of the terminal 101, that a first SCell is an on-demand SSB SCell.

In some embodiments, terms like "NES cell", "NES SCell" and "on-demand SSB SCell" in the present disclosure are interchangeable.

In some embodiments, the terminal 101 may, based on the implementation of the terminal 101, determine whether the first SCell is an on-demand SSB SCell. For example, the terminal 101 determines by itself whether the first SCell is an on-demand SSB SCell, that is, the terminal 101 determines by itself whether the SSB of the first SCell is sent based on a request.

In a possible implementation manner, in a case where an SSB of the first SCell is not detected at a reception occasion of the SSB of the first SCell, the terminal 101 determines that the first SCell is an on-demand SSB SCell. In some embodiments, in a first scenario, the terminal 101 determines whether the SSB of the first SCell can be detected at the reception occasion of the SSB of the first SCell. If the terminal 101 detects the SSB of the first SCell at the reception occasion of the SSB of the first SCell, it is considered that the first SCell is not an on-demand SSB SCell. For example, it may be considered that the first SCell is a cell where the SSB is periodically sent, such as a normal cell. That is, the SSB of the first SCell is not sent based on a request. For example, the SSB of the first SCell is sent periodically. If the terminal 101 fails to detect the SSB of the first SCell at the reception occasion of the SSB of the first SCell, it is determined that the first SCell is an on-demand SSB SCell, or that the SSB of the first SCell is sent based on a request. For example, the reception occasion of the SSB of the first SCell may be notified to the terminal by a network device, so that the terminal determines whether the SSB of the first SCell can be detected at the reception occasion of the SSB of the first SCell. If the terminal cannot detect the SSB of the first SCell at the reception occasion of the SSB of the first SCell, it is determined that the first SCell is an on-demand SSB SCell. Optionally, if the terminal successfully detects the SSB of the first SCell at the reception occasion of the SSB of the first SCell, it is determined that the first SCell is not an on-demand SSB SCell, and for example, the first SCell may be considered to be a normal cell (or a normal SCell).

In some embodiments, the first scenario described above may include, but is not limited to, any of: SCell addition/modification; SCell activation; SCell time-frequency synchronization; or SCell measurement. For example, in the scenario of SCell addition/modification, in a case where the terminal 101 fails to detect the SSB of the first SCell at the reception occasion of the SSB of the first SCell, the terminal determines that the first SCell is an on-demand SSB SCell. For example, in the scenario of SCell activation, in a case where the terminal 101 fails to detect the SSB of the first SCell at the reception occasion of the SSB of the first SCell, the terminal determines that the first SCell is an on-demand SSB SCell. For example, in the scenario of SCell time-frequency synchronization, in a case where the terminal 101 fails to detect the SSB of the first SCell at the reception occasion of the SSB of the first SCell, the terminal determines that the first SCell is an on-demand SSB SCell. For example, in the scenario of SCell measurement, in a case where the terminal 101 fails to detect the SSB of the first SCell at the reception occasion of the SSB of the first SCell, the terminal determines that the first SCell is an on-demand SSB SCell. The "SCell time-frequency synchronization" may refer to SCell time domain synchronization and/or frequency domain synchronization. The SCell measurement may include, but is not limited to, layer 1/layer 3 measurement on the SCell.

In step S2102, the terminal 101 sends second indication information to a network device 102 via a second cell, and the second indication information is configured to instruct the network device 102 to send the SSB in the first SCell.

In some embodiments, the second indication information may be sent by the terminal 101. For example, the second indication information may be sent by the terminal 101 to the network device 102, that is, the terminal 101 sends the second indication information to the network device 102, and correspondingly, the network device 102 receives the second indication information sent by the terminal 101.

In some embodiments, the second indication information may be sent by the terminal 101 via the second cell. For example, the second indication information may be sent by the terminal 101 to the network device 102 via the second cell, that is, the terminal 101 sends the second indication information to the network device 102 via the second cell, and correspondingly, the network device 102 receives the second indication information sent by the terminal 101 via the second cell. For example, the terminal 101 sending the second indication information via the second cell may mean that the terminal 101 sends the second indication information using an uplink grant (UL grant) configured by the second cell for the terminal 101.

In embodiments of the present disclosure, in a case where the terminal 101 determines that the first SCell is an on-demand SSB SCell, the terminal 101 may send the second indication information to the network device 102 via the second cell, and the second indication information is used to instruct the network device 102 to send the SSB in the first SCell. For example, the terminal 101 determines, based on implementation of the terminal 101, that the first SCell is an on-demand SSB SCell, the terminal 101 may send the second indication information to the network device 102 via the second cell, and the second indication information is used to instruct the network device 102 to send the SSB in the first SCell. For example, the terminal 101 may instruct the network device 102 through the second indication information that SSB transmission in the first SCell is needed.

In some embodiments, the second cell and the first SCell are aggregated in carriers. For example, there is a carrier aggregation relationship between the second cell and the first SCell. The second cell may be a primary cell corresponding to the first SCell, or the second cell is an SCell that is aggregated with the first SCell in carriers. For example, the second cell may also be another normal SCell, or the second cell may also be an SCell of which an SSB has already been acquired by the terminal.

It should be noted that, in some embodiments, the first SCell may be an SCell added and/or modified to the terminal 101 by the network device 102, the first SCell may be an SCell that needs to be activated, the first SCell may be an SCell with which time-frequency synchronization is needed, or the first SCell may be an SCell on which layer 1/layer 3 measurement is needed. For example, the first SCell may be an SCell in any of the following scenarios: SCell addition and/or modification; SCell activation; SCell time-frequency synchronization; SCell measurement, etc. In different scenarios, when the terminal 101 determines that the first SCell is an on-demand SSB SCell, the terminal 101 may send the second indication information to the network device 102 via the second cell to instruct the network device 102 to send the SSB in the first SCell. Implementation manners in these four scenarios of SCell addition and/or modification, SCell activation, SCell time-frequency synchronization, and SCell measurement will be illustrated with reference to the following examples.

### Scenario 1: SCell addition and/or modification

In some embodiments, the terminal 101 receives a first radio resource control (RRC) signaling sent by the network device 102, the first RRC signaling indicates at least one SCell. The at least one SCell includes the first SCell. In a case where the terminal 101 determines that the first SCell is an on-demand SSB SCell, the terminal 101 may send the second indication information to the network device 102 via the second cell.

For example, the first RRC signaling is sent by the network device 102 to the terminal 101, that is, the network device 102 sends the first RRC signaling to the terminal 101, and correspondingly, the terminal 101 receives the first RRC signaling sent by the network device 102. In the case where the terminal 101 receives the first RRC signaling sent by the network device 102 and determines that the at least one SCell indicated in the first RRC signaling includes the first SCell, and the terminal 101 determines that the first SCell is an on-demand SSB SCell, then the terminal 101 sends the second indication information to the network device 102 via the second cell to instruct the network device 102 to send the SSB in the first SCell.

In some embodiments, the first RRC signaling may be an SCell addition and/or modification signaling. For example, the terminal 101 receives the first RRC signaling for the SCell addition and/or modification sent by network device 102, and the first RRC signaling indicates at least one SCell (the at least one SCell may be at least one added and/or modified SCell). The at least one SCell includes the first SCell. In the case where the terminal 101 determines that the first SCell is an on-demand SSB SCell, the terminal 101 may send the second indication information to the network device 102 via the second cell.

For example, the first RRC signaling is sent by the network device 102 to the terminal 101, that is, the network device 102 sends the first RRC signaling to the terminal 101. Accordingly, the terminal 101 receives the first RRC signaling sent by the network device 102. The at least one SCell indicated in the first RRC signaling may be at least one SCell that needs to be added and/or modified to the terminal 101. The terminal 101 receives the first RRC signaling sent by the network device 102 and determines that the at least one SCell indicated in the first RRC signaling includes the first SCell, and the terminal 101 determines that the first SCell is an on-demand SSB SCell, then the terminal 101 sends the second indication information to the network device 102 via the second cell to instruct the network device 102 to send the SSB in the first SCell. That is, the terminal 101 receives the first RRC signaling for SCell addition and/or modification, and the terminal 101 indicates to the network device 102 through the second indication information that it requests SSB transmission in the "added and/or modified SCell". Before sending the second indication information, the terminal 101 first determines whether the "added and/or modified SCell" is an on-demand SSB SCell, and for example, the terminal 101 determines whether an SSB is sent in the "added and/or modified SCell". In a case where the terminal 101 determines that the "added and/or modified SCell" is an on-demand SSB SCell, for example, the terminal 101 determines that the "added and/or modified SCell" is not sending an SSB, the terminal 101 indicates to the network device 102 through the second indication information that it requests SSB transmission in the "added and/or modified SCell".

In some embodiments, the second indication information may be a second RRC signaling, and the second RRC signaling includes respective identifiers of one or more SCells and/or respective SSB request indications for the one or more SCells; the one or more SCells are included in the above at least one SCell; and the one or more SCells include the first SCell. The one or more SCells are one or more on-demand SSB SCells. The at least one SCell is the at least one SCell indicated in the first RRC signaling. That is, the second indication information may be an RRC signaling, which may directly include respective identifiers (e.g., SCellindexes) of one or more SCells and/or respective SSB request indications for the one or more SCells to indicate to the network device 102 that an SSB of an SCell associated with an SCellindex is requested. In other words, the identifier (such as SCellindex) of an SCell and/or the SSB request indication included in the RRC signaling may indicate to the network device 102 that SSB transmission in the SCell associated with the SCellindex is needed.

For example, the terminal 101 receives the first RRC signaling for SCell addition and/or modification sent by the network device 102, the first RRC signaling indicates at least one SCell, and the at least one SCell includes the first SCell, and the terminal 101 determines that the first SCell is an on-demand SSB SCell (or NES SCell), then the terminal 101 may send the second RRC signaling to the network 102 via the second cell, and the second RRC signaling includes an SCellindex of the first SCell and/or an SSB request indication for the first SCell, to indicate to the network device 102 that the SSB of the first SCell associated with the SCellindex is requested or that SSB transmission in the first SCell associated with the SCellindex is needed. In some embodiments, the above second RRC signaling may be a newly defined RRC signaling or a dedicated SIB request.

In some embodiments, the second indication information may be a medium access control-control element (MAC-CE); the MAC-CE includes a first bitmap, the first bitmap is used to indicate whether SSB transmission in a corresponding SCell is requested, the first bitmap includes one or more first indication bits, the one or more first indication bits each indicate whether SSB transmission in a respective SCell is requested (or indicate that the network device is requested to send an SSB in a respective SCell), and the one or more first indication bits have a one-to-one correspondence with the at least one SCell. The at least one SCell is the at least one SCell indicated in the first RRC signaling. It should be noted that indication bits in the MAC-CE are typically greater than or equal to 8 bits. For example, the indication bits in the MAC-CE are 8 bits, even if there are 5 SCells of which respective SSBs are requested to be sent, the indication bits in the MAC-CE are also one byte consisting of 8 bits, of which 5 indication bits are used to instruct the network device to send respective SSBs in the five SCells, and the remaining indication bits are reserved, represented by R.

For example, the second indication information sent by the terminal 101 to the network device 102 may be a MAC-CE. For example, the first RRC signaling indicates M SCells, the MAC-CE may include a first bitmap, the first bitmap includes M first indication bits, each indication bit in the first bitmap corresponds to an SCell and is used to indicate whether to request the network device to send an SSB in the corresponding SCell, and the M first indication bits have a one-to-one correspondence with the M SCells. For example, the first RRC signaling indicates three SCells (such as SCell 1, SCell 2, and SCell 3), the second indication information sent by the terminal 101 to the network device 102 is a MAC-CE, the MAC-CE may include the first bitmap, the first bitmap includes three indication bits, of which a first indication bit corresponds to SCell 1 and indicates whether SSB transmission in the SCell 1 is requested, a second indication bit corresponds to SCell 2 and indicates whether SSB transmission in the SCell 2 is requested, and a third indication bit corresponds to SCell 3 and indicates whether SSB transmission in the SCell 3 is requested. If a value of an indication bit in the first bitmap is 1, it means that SSB transmission in the corresponding SCell is requested, if the value of the indication bit in the first bitmap is 0, it means that SSB transmission in the corresponding SCell is not requested, or the indication bit in the first bitmap may also have other values, which are not limited in the present disclosure and will not be elaborated.

For example, the terminal 101 receives the first RRC signaling for SCell addition and/or modification sent by the network device 102, the first RRC signaling indicates three SCells (such as SCell 1, SCell 2 and SCell 3), the three SCells include the first SCell, which for example is SCell 2, and the terminal 101 determines that the first SCell is an on-demand SSB SCell (or NES SCell), and the other two SCells, SCell 1 and SCell 3, are not on-demand SSB SCells, then the terminal 101 sends the second indication information to the network device 102 to indicate to the network device 102 that SSB transmission in the first SCell is requested. The second indication information sent by the terminal 101 to the network device 102 is a MAC-CE, the MAC-CE may include a first bitmap, the first bitmap includes three indication bits, of which a value of a first indication bit is 0, indicating that SSB transmission in the corresponding SCell 1 is not required, a value of a second indication bit is 1, indicating that SSB transmission in the corresponding SCell 2 is required, and a value of a third indication bit is 0, indicating that SSB transmission in the corresponding SCell 3 is not required. That is, the MAC-CE sent by the terminal 101 to the network device 102 includes indications associated with all SCells (i.e., all SCells indicated in the first RRC signaling), and in the MAC-CE, an indication bit associated with a cell that is not an on-demand SSB SCell (or NES SCell) indicates that SSB transmission in this cell is not needed, and an indication bit associated with a cell that is an on-demand SSB SCell (or NES SCell) indicates whether SSB transmission in this cell is needed.

In some embodiments, the second indication information may be a MAC-CE, the MAC-CE includes a second bitmap, the second bitmap is used to indicate whether SSB transmission in one or more third cells is requested, the second bitmap includes one or more second indication bits, the one or more second indication bits each indicate whether SSB transmission in a respective third cell is requested, the one or more second indication bits have a one-to-one correspondence with the one or more third cells, the one or more third cells are one or more on-demand SSB SCells among the at least one SCell, and the one or more third cells include the first SCell. The at least one SCell is the at least one SCell indicated in the first RRC signaling. The one or more third cells are one or more cells of which respective SSBs are requested by a certain terminal on demand, and may be part or all of the at least one SCell indicated in the first RRC signaling.

For example, the first RRC signaling indicates M SCells, and the terminal determines that N SCells among the M SCells are on-demand SSB SCells (i.e., the third cells). The second indication information sent by the terminal 101 to the network device 102 may be a MAC-CE, the MAC-CE may include a second bitmap, the second bitmap includes N second indication bits, and each indication bit in the second bitmap corresponds to an SCell and indicates whether to request the network device to send an SSB in the corresponding SCell. For example, the indication bits in the second bitmap have a one-to-one correspondence with the on-demand SSB SCells (e.g., the third cells in the present disclosure), and the indication bits in the second bitmap are used to indicate whether to request the network to send respective SSBs in respective SCells. The terminal determines, among the on-demand SSB SCells, which SCell's SSB needs to be requested, and set the value of the corresponding indication bit to 1. For example, the terminal 101 receives the first RRC signaling sent by the network device 102, the first RRC signaling indicates three SCells (such as SCell 1, SCell 2 and SCell 3), SCell 1 and SCell 2 among these three SCells are on-demand SSB SCells (or NES SCell), and the three SCells include the first SCell (e.g., SCell 2). The terminal 101 determines that SCell 1 and SCell 2 are on-demand SSB SCells (or NES SCells). The second indication information sent by the terminal 101 to the network device 102 is a MAC-CE, the MAC-CE may include a second bitmap, the second bitmap includes two indication bits, of which a value of a first indication bit is 1, indicating that SSB transmission in the corresponding SCell 1 is requested, and a value of a second indication bit is 1, indicating that SSB transmission in the corresponding SCell 2 is requested. That is, the MAC-CE sent by the terminal 101 to the network device 102 includes an indication associated with an on-demand SSB SCell (or NES SCell) to indicate whether SSB transmission in the corresponding SCell is needed.

### Scenario 2: SCell activation

In some embodiments, the terminal 101 receives an SCell activation/deactivation MAC CE sent by the network device 102, and the SCell activation/deactivation MAC CE includes, for each SCell of at least one SCell, an activation/deactivation indication bit. In a case where the at least one SCell includes the first SCell, and the first SCell is an activated SCell, the terminal 101 sends the second indication information to the network device 102 via the second cell to instruct the network device to send the SSB in the first SCell. The at least one SCell is the at least one SCell indicated in the first RRC signaling.

For example, the SCell activation/deactivation MAC CE may be sent by the network device 102 to the terminal 101, that is, the network device 102 sends the SCell activation/deactivation MAC CE to the terminal 101, and correspondingly, the terminal 101 receives the SCell activation/deactivation MAC CE sent by the network device 102. The terminal 101 receives the SCell activation/deactivation MAC CE sent by the network device 102, the SCell activation/deactivation MAC CE indicates activation of an SCell associated with SCellindex i, the SCell associated with the SCellindex i is included in the at least one SCell indicated in the first RRC signaling, and the SCell associated with the SCellindex i includes the first SCell, then the terminal 101 sends the second indication information to the network device 102 via the second cell to indicate to the network device that SSB transmission in the first SCell is needed.

For example, the terminal 101 receives the SCell activation/deactivation MAC CE sent by the network device 102, the SCell activation/deactivation MAC CE indicates three SCells (such as SCell 1, SCell 2 and SCell 3), the three SCells include the first SCell (e.g., SCell 2), and the terminal 101 determines that the first SCell (e.g., SCell 2) is an on-demand SSB SCell (or NES SCell), and the other two SCells, SCell 1 and SCell 3, are not on-demand SSB SCells, then the terminal 101 sends the second indication information to the network device 102 to indicate to the network device 102 that SSB transmission in the first SCell (e.g., SCell 2) is requested. The second indication information may be an RRC signaling, which includes an SCellindex of the first SCell (e.g., SCell 2) and/or an SSB request indication for the first SCell (e.g., SCell 2), to indicate to the network device 102 that the SSB of the first SCell (e.g., SCell 2) associated with the SCellindex is requested. Alternatively, the second indication information may be a MAC CE, the MAC CE includes a bitmap, the bitmap includes 3 indication bits, of which a value of a first indication bit is 0, indicating that SSB transmission in the corresponding SCell 1 is not requested, a value of a second indication bit is 1, indicating that SSB transmission in the corresponding SCell 2 is requested, and a value of a third indication bit is 0, indicating that SSB transmission in the corresponding SCell 3 is not requested. Alternatively, the second indication information may be a MAC CE, the MAC CE includes a bitmap, the bitmap includes 1 indication bit, and a value of this indication bit is 1, indicating that SSB transmission in the corresponding SCell 2 is requested.

### Scenario 3: SCell time-frequency synchronization

In some embodiments, in a case where the terminal 101 determines that time-frequency synchronization with the first SCell is needed, the terminal 101 sends second indication information to the network device 102 via the second cell. For example, in a case where the terminal 101 needs to conduct time-frequency synchronization with the first SCell, and the terminal 101 determines that the first SCell is an on-demand SSB SCell, the terminal 101 may send the second indication information to the network device 102 via the second cell to instruct the network device 102 to send SSB in the first SCell. In other words, in a case where the terminal 101 needs to conduct time-frequency synchronization with an SCell, the terminal 101 may send the second indication information to the network device 102 via the second cell to indicate to the network device 102 that SSB transmission in the SCell with which time-frequency synchronization is needed is requested.

### Scenario 4: SCell measurement

In some embodiments, in a case where the terminal 101 determines that layer 1/layer 3 measurement on the first SCell is needed, the terminal 101 sends the second indication information to the network device 102 via the second cell. For example, in a case where the terminal 101 needs to perform layer 1/layer 3 measurement on the first SCell, and the terminal 101 determines that the first SCell is an on-demand SSB SCell, the terminal 101 may send the second indication information to the network device 102 via the second cell to instruct the network device 102 to send the SSB in the first SCell. That is, the terminal 101 needs to perform layer 1/layer 3 measurement on an SCell, and the measurement on the deactivated SCell is performed based on a long cycle configured by the network device 102. When/before a measurement occasion arrives, the terminal 101 may send the second indication information to the network device 102 via the second cell to indicate to the network device 102 that SSB transmission in the SCell on which layer 1/layer 3 measurement is needed is requested.

Optionally, in some embodiments, before the terminal 101 sends the second indication information, the method may further include a step S2103, that is, the terminal 101 may first detect whether an SSB is sent in the first SCell, or in other words, the terminal 101 may first detect whether the network device 102 sends the SSB of the first SCell, here the network device 102 sending the SSB of the first SCell may refer to that the network device 102 sends the SSB in the first SCell. Optionally, in some embodiments, in a case where the terminal 101 detects that the SSB is sent in the first SCell (for example, the SSB is being sent in the first SCell), or the terminal 101 detects that the network device 102 is sending the SSB of the first SCell, the terminal 101 may not send the second indication information. For example, before sending the second indication information, if the terminal 101 detects that the SSB is sent in the first SCell, the terminal does not send the second indication information. For example, before sending the second indication information, if another terminal requests the network device 102 to send the SSB in the first SCell, and the terminal 101 can detect the SSB sent in the first SCell, the terminal 101 will not send the second indication information.

Optionally, in some embodiments, in a case where the terminal 101 cannot detect the SSB of the first SCell, it is considered that the SSB of the first SCell is not requested to be sent, and the terminal 101 needs to send the second indication information. For example, before sending the second indication information, in a case where the terminal 101 cannot detect the SSB of the first SCell, the terminal 101 needs to send the second indication information to the network device 102 via the second cell to instruct the network device 102 to send the SSB in the first SCell.

In a possible implementation manner, the terminal 101 detects whether the SSB is sent in the first SCell (or the terminal 101 may first detect whether the network device 102 sends the SSB of the first SCell) by determining whether the SSB of the first SCell is detected at the reception occasion of the SSB of the first SCell. For example, in a case where the SSB of the first SCell is detected by the terminal 101 at the reception occasion of the SSB of the first SCell, it is considered that the terminal 101 has detected that the SSB is sent in the first SCell. For example, in a case where the SSB of the first SCell is not detected by the terminal 101 at the reception occasion of the SSB of the first SCell, it is considered that the terminal 101 cannot detect the SSB of the first SCell.

Optionally, in some embodiments, the method may further include a step S2104, that is, the network device 102 sends the SSB in the first SCell. For example, the network device 102 sends the SSB in the first SCell, and correspondingly, the terminal 101 receives the SSB sent by the network device 102 in the first SCell.

In embodiments of the present disclosure, the terminal 101 sends the second indication information to the network device 102 via the second cell to instruct the network device 102 to send the SSB in the first SCell. The network device 102 receives the second indication information and sends the SSB in the first SCell, so that the terminal 101 can receive the SSB of the first SCell. The SSB of the first SCell may be used by terminal 101 to achieve synchronization with the first SCell. For example, the network device 102 sends the SSB to terminal 101 in the first SCell to facilitate cell search and identification by terminal 101.

In some embodiments, the names of various information are not limited to those recorded in embodiments, and terms such as "information", "message", "signal", "signaling", "report", "configuration", "indication", "instruction", "command", "channel", "parameter", "domain", "field", "symbol", "code element", "codebook", "codeword", "codepoint", "bit", "data", "program", and "chip" are interchangeable.

In some embodiments, terms such as "uplink", "up link", and "physical uplink" are interchangeable, terms such as "downlink", "down link", and "physical downlink" are interchangeable, terms such as "side", "sidelink", "side communication", "sidelink communication", "direct connection", "direct link", "direct communication", and "direct link communication" are interchangeable.

In some embodiments, "obtain", "acquire", "get", "receive", "transmission", "bidirectional transmission", "send and/or receive" are interchangeable, which may be interpreted as receiving from other entities, obtaining from a protocol, obtaining from a higher layer, acquiring by self-processing, autonomous implementation, and so on.

In some embodiments, terms such as "send", "transmit", "report", "distribute", "transmission", "bidirectional transmission", "send and/or receive" are interchangeable.

In some embodiments, terms such as "certain", "preset", "predetermined", "set", "indicated", "specific", "any", "first", etc. are interchangeable. Expressions like "certain A", "preset A", "predetermined A", "set A", "indicated A", "specific A", "any A", "first A" may be interpreted as A pre-defined in a protocol or A obtained based on setting, configuration, or indication, or may be interpreted as specific A, certain A, any A, or first A, etc., but the present disclosure is not limited thereto.

In some embodiments, determination or judgment may be made through a value of 1 bit (0 or 1) or a boolean represented by true or false, or may be made through a comparison of numerical values (such as comparison with a predetermined value), but the present disclosure is not limited thereto.

The method involved in embodiments of the present disclosure may include at least one of the steps S2101 to S2104. For example, the step S2101 may be implemented as an independent embodiment, the step S2102 may be implemented as an independent embodiment, the step S2101 + the step S2102 may be implemented as an independent embodiment, the step S2102 + the step S2103 may be implemented as an independent embodiment, the step S2101 + the step S2102 + the step S2103 may be implemented as an independent embodiment, the step S2102 + the step S2103 + the step S2104 may be implemented as an independent embodiment, the step S2101 + the step S2102 + the step S2104 may be implemented as an independent embodiment, the step S2101 + the step S2102 + the step S2103 + the step S2104 may be implemented as an independent embodiment, or the step S2102 + the step S2104 may be implemented as an independent embodiment, but the present disclosure is not limited thereto.

In some embodiments, the steps S2102 to S2104 are optional, and one or more of these steps may be omitted or replaced in different embodiments.

In some embodiments, the step S2101, the step S2103, and the step S2104 are optional, and one or more of these steps may be omitted or replaced in different embodiments.

In some embodiments, the step S2103 and the step S2104 are optional, and one or more of these steps may be omitted or replaced in different embodiments.

In some embodiments, the step S2101 and the step S2104 are optional, and one or more of these steps may be omitted or replaced in different embodiments.

In some embodiments, the step S2101 and the step S2103 are optional, and one or more of these steps may be omitted or replaced in different embodiments.

In some embodiments, the step S2104 is optional, and one or more of these steps may be omitted or replaced in different embodiments.

In some embodiments, the step S2101 is optional, and one or more of these steps may be omitted or replaced in different embodiments.

In some embodiments, the step S2103 is optional, and one or more of these steps may be omitted or replaced in different embodiments.

In some embodiments, reference may be made to other optional implementation manners described before or after the description corresponding to FIG. 2A.

FIG. 2B is a schematic interactive diagram of a communication method according to embodiments of the present disclosure. As shown in FIG. 2B, the communication method according to embodiments of the present disclosure may be applied to the communication system 100, and the method includes, but is not limited to, the following steps.

In step S2201, a terminal 101 determines, based on implementation of the terminal 101, that a first SCell is an on-demand SSB SCell.

For optional implementation manners of the step S2201, reference may be made to the optional implementation manners of the step S2101 in FIG. 2A and other related parts in the embodiments involved in FIG. 2A, which will not be repeated here.

In step S2202, the terminal 101 sends first information to a network device 102 in the first SCell, and first information is configured to instruct the network device 102 to send an SSB in the first SCell.

In some embodiments, if the terminal 101 determines that the first SCell is an on-demand SSB SCell, the terminal 101 may request SSB transmission in the first SCell through the first information. For example, the terminal 101 sends the first information to the network device 102 to instruct the network device 102 to send the SSB in the first SCell.

In some embodiments, the first information may be sent in the first SCell by the terminal 101. For example, the first information may be sent by the terminal 101 in the first SCell to the network device 102, that is, the terminal 101 sends the first information to the network device 102 in the first SCell, and correspondingly, the network device 102 receives the first information sent by the terminal 101 in the first SCell.

In some embodiments, the terminal 101 may obtain a configuration of the first information associated with the first SCell from a system information block (SIB) or a dedicated RRC signaling. For example, the terminal 101 may send the first information to the network device according to the configuration of the first information associated with the first SCell. For example, the terminal 101 may send the first information to the network device 102 in the first SCell according to the configuration of the first information associated with the first SCell to instruct the network device 102 to send the SSB in the first SCell. For example, the above SIB or dedicated RRC signaling may be sent in other cells that have a carrier aggregation relationship with the first SCell, such as a primary cell or other secondary cells. For example, the above SIB or dedicated RRC signaling may be sent by the network device 102 to the terminal 101. For example, the network device 102 sends the SIB or dedicated RRC signaling in other cells that have a carrier aggregation relationship with the first SCell, and correspondingly, the terminal 101 receives the SIB or dedicated RRC signaling sent by the network device 102, so that the terminal 101 obtains the configuration of the first information associated with the first SCell from the SIB or dedicated RRC signaling.

In some embodiments, the first information may be a WUS signal, and the WUS signal may be used to send a preamble. For example, the preamble may be a preamble reserved by the system, and the sending of the preamble indicates a request for the SSB.

In some embodiments, the configuration of the first information associated with the first SCell may include, but is not limited to, at least one of: an initial transmission power of the first information or a parameter for calculating an initial transmission power; a power increasing step size of the first information; a maximum number of times the first information is sent; a preamble index or sequence reserved for the first information; configuration information of a random access occasion (RO) resource for sending the first information; or a configuration of a timer, where the timer is configured to indicate a duration for which the terminal 101 monitors the SSB sent in the first SCell, and configured for the terminal 101 to determine whether to resend the first information.

For example, the initial transmission power of the first information may refer to a transmission power used by the terminal 101 to send the first information for the first time. The power increasing step size of the first information may refer to a power increment each time the first information is sent. For example, if the terminal 101 determines that the first SCell is an on-demand SSB SCell, the terminal 101 may use the initial transmission power to send the first information to the network device 102 for the first time. After the terminal 101 sends the first information, it starts the timer and monitors the SSB sent in the first SCell during the operation of the timer. If the SSB is not received (or not detected or not monitored) in the first SCell during the operation of the timer, the terminal 101 increase the power by the above power increasing step size when the timer expires, and uses the increased power to send the first information to the network device 102, and until at least one of the following conditions is met, the terminal 101 stops sending the first information. The conditions may include but are not limited to that: the SSB is received in the first SCell during the operation of the timer; the increased power reaches a maximum uplink transmission power of the terminal 101; the increased power reaches a maximum uplink transmission power allowed by the first SCell; or the number of times the first information is sent reaches the maximum transmission number of the first information.

It should be noted that in some embodiments, there may be one or more first SCells (on-demand SSB SCells or NES SCells) as described above, that is, the configuration of the first information may be configured according to an NES SCell granularity (per NES SCell), that is, each NES SCell has its own associated configuration for the first information. The terminal 101 may request SSB transmission in one or more first SCells. The one or more first SCells may be associated with the same configuration or different configurations for the first information. For example, the one or more first SCells may be associated with different configurations for the first information, respectively. For example, the one or more first SCells may be associated with the same configuration for the first information. For example, there are multiple first SCells, and the multiple first SCells may be associated with different configurations for the first information, respectively. That is, each first SCell has an associated configuration for the first information, for example, each first SCell has an associated preamble index or sequence and/or configuration information of a random access occasion (RO) resource, and the preamble is used to request SSB transmission in this first SCell. Alternatively, the multiple first SCells may be associated with the same configuration for the first information, that is, the multiple first SCells share a set of configurations for the first information.

In some embodiments, the terminal 101 may obtain a configuration of the first SCell from an SIB or a dedicated RRC signaling. For example, the terminal 101 may send the first information to the network device according to the configuration of the first SCell and/or the configuration of the first information associated with the first SCell to instruct the network device 102 to send the SSB in the first SCell. For example, the SIB or dedicated RRC signaling may be sent by other cells that have a carrier aggregation relationship with the first SCell. In some embodiments, the configuration of the first SCell may include, but is not limited to, at least one of: an identifier and/or a frequency point of the first SCell; a random access channel (RACH) related configuration of the first SCell; the configuration of the first information associated with the first SCell; or information in an SIB1 of the first SCell.

Optionally, in some embodiments, the terminal 101 receives a random access response media access control protocol data unit (MAC PDU) including a header with a random access preamble identifier (RAPID) of the preamble index or sequence, and determines that the network device 102 acknowledges a request for the SSB in the first SCell. For example, a MAC layer of the terminal 101 receives the MAC PDU including the header with the RAPID of the preamble index or sequence, and notifies a higher layer of the terminal 101 that an SSB request acknowledgement is received, here the SSB request acknowledgement may be understood as that the network device 101 acknowledges the request for the SSB in the first SCell, or in other words, the MAC layer of the terminal 101 notifies the higher layer of the terminal 101 that the network device acknowledges the request for the SSB in the first SCell. For example, the MAC layer of the terminal 101 receives the MAC PDU including the header with the RAPID of the preamble index or sequence, and sends a notification to the higher layer of the terminal 101 to notify the higher layer of the terminal 101 that the network device acknowledges the request for the SSB in the first SCell. For example, the random access response MAC PDU may be sent by the network device 102 to the terminal 101. For example, the network device 102 sends the random access response MAC PDU to the terminal 101, and correspondingly, the terminal 102 receives the random access response MAC PDU sent by the network device 102. The random access response MAC PDU includes the header with the random access preamble identifier (RAPID) of the preamble index or sequence. For example, after the terminal 101 sends the first information, the terminal 101 receives the header with the RAPID of the preamble index or sequence transmitted by itself, it may be considered that the random access is successfully completed, and the higher layer of the terminal 101 may be notified that the SSB request acknowledgement is received.

Optionally, in some embodiments, before the terminal 101 sends the first information, the method may further include a step S2203, that is, the terminal 101 may first detect whether an SSB is sent in the first SCell, or in other words, the terminal 101 may first detect whether the network device 102 sends the SSB of the first SCell, here the network device 102 sending the SSB of the first SCell may refer to that the network device 102 sends the SSB in the first SCell. Optionally, in some embodiments, in a case where the terminal 101 detects that the SSB is sent in the first SCell (for example, the SSB is being sent in the first SCell), or the terminal 101 detects that the network device 102 is sending the SSB of the first SCell, the terminal 101 may not send the first information. For example, before sending the first information, if the terminal 101 detects that the SSB is sent in the first SCell, the terminal does not send the first information. For example, before sending the first information, if another terminal requests the network device 102 to send the SSB in the first SCell, and the terminal 101 can detect the SSB sent in the first SCell, the terminal 101 will not send the first information.

Optionally, in some embodiments, in a case where the terminal 101 cannot detect the SSB of the first SCell, it is considered that the SSB of the first SCell is not requested to be sent, and the terminal 101 needs to send the first information. For example, before sending the first information, in a case where the terminal 101 cannot detect the SSB of the first SCell, the terminal 101 needs to send the first information to the network device 102 in the first SCell to instruct the network device 102 to send the SSB in the first SCell.

In a possible implementation manner, the terminal 101 detects whether the SSB is sent in the first SCell (or the terminal 101 may first detect whether the network device 102 sends the SSB of the first SCell) by determining whether the SSB of the first SCell is detected at the reception occasion of the SSB of the first SCell. For example, in a case where the SSB of the first SCell is detected by the terminal 101 at the reception occasion of the SSB of the first SCell, it is considered that the terminal 101 has detected that the SSB is sent in the first SCell. For example, in a case where the SSB of the first SCell is not detected by the terminal 101 at the reception occasion of the SSB of the first SCell, it is considered that the terminal 101 cannot detect the SSB of the first SCell.

Optionally, in some embodiments, the method may further include a step S2204, that is, the network device 102 sends the SSB in the first SCell. For example, the network device 102 sends the SSB in the first SCell, and correspondingly, the terminal 101 receives the SSB sent by the network device 102 in the first SCell.

In embodiments of the present disclosure, the terminal 101 sends the first information to the network device 102 in the first SCell to instruct the network device 102 to send the SSB in the first SCell. The network device 102 receives the first information and sends the SSB in the first SCell, so that the terminal 101 can receive the SSB of the first SCell. The SSB of the first SCell may be used by terminal 101 to achieve the synchronization with the first SCell, the measurement on the first SCell, etc.

The method involved in the embodiments of the present disclosure may include at least one of the steps S2201 to S2204. For example, the step S2201 may be implemented as an independent embodiment, the step S2202 may be implemented as an independent embodiment, the step S2201 + the step S2202 may be implemented as an independent embodiment, the step S2202 + the step S2203 may be implemented as an independent embodiment, the step S2201 + the step S2202 + the step S2203 may be implemented as an independent embodiment, the step S2202 + the step S2203 + the step S2204 may be implemented as an independent embodiment, the step S2201 + the step S2202 + the step S2204 may be implemented as an independent embodiment, the step S2201 + the step S2202 + the step S2203 + the step S2204 may be implemented as an independent embodiment, or the step S2202 + the step S2204 may be implemented as an independent embodiment, but the present disclosure is not limited thereto.

In some embodiments, the steps S2202 to S2204 are optional, and one or more of these steps may be omitted or replaced in different embodiments.

In some embodiments, the step S2201, the step S2203, and the step S2204 are optional, and one or more of these steps may be omitted or replaced in different embodiments.

In some embodiments, the step S2203 and the step S2204 are optional, and one or more of these steps may be omitted or replaced in different embodiments.

In some embodiments, the step S2201 and the step S2204 are optional, and one or more of these steps may be omitted or replaced in different embodiments.

In some embodiments, the step S2201 and the step S2203 are optional, and one or more of these steps may be omitted or replaced in different embodiments.

In some embodiments, the step S2204 is optional, and one or more of these steps may be omitted or replaced in different embodiments.

In some embodiments, the step S2201 is optional, and one or more of these steps may be omitted or replaced in different embodiments.

In some embodiments, the step S2203 is optional, and one or more of these steps may be omitted or replaced in different embodiments.

In some embodiments, reference may be made to other optional implementation manners described before or after the description corresponding to FIG. 2B.

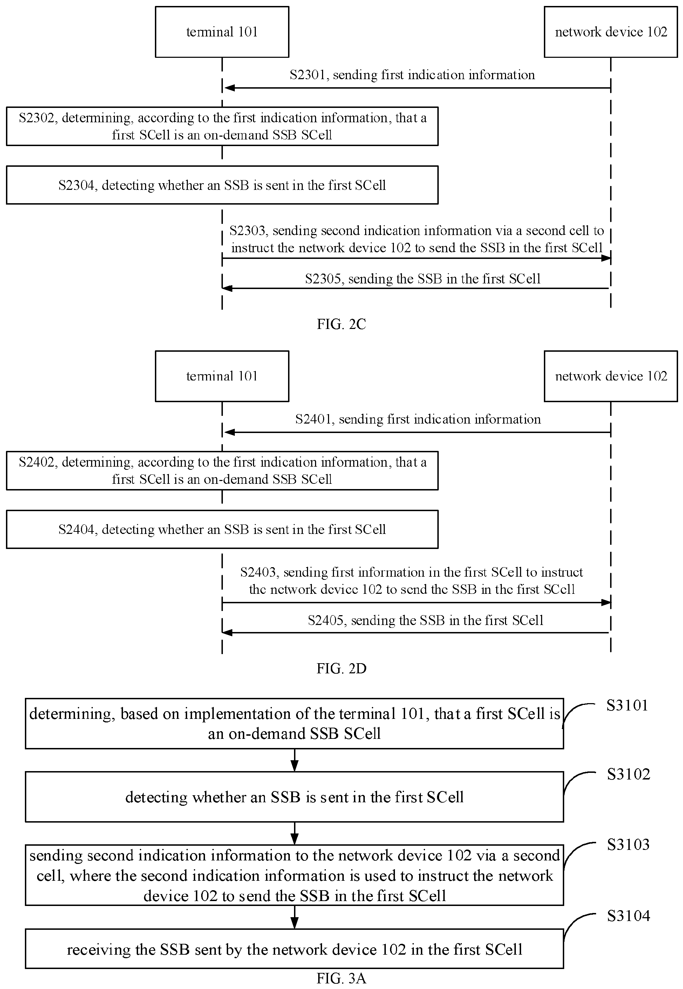

FIG. 2C is a schematic interactive diagram of a communication method according to embodiments of the present disclosure. As shown in FIG. 2C, the communication method according to embodiments of the present disclosure may be applied to the communication system 100, and the method includes, but is not limited to, the following steps.

In step S2301, a network device 102 sends first indication information.

In some embodiments, the first indication information may be sent by the network device 102 to a terminal 101. For example, the network device 102 sends the first indication information to the terminal 101, and correspondingly, the terminal 101 receives the first indication information. For example, the terminal 101 receives the first indication information sent by the network device 102.

In some embodiments, the first indication information is configured to indicate whether a first SCell is an on-demand SSB SCell. For example, the first indication information is used by the terminal 101 to determine whether the first SCell is an on-demand SSB SCell. For example, the network device 102 may indicate, through the first indication information, whether an SCell (such as the first SCell) is an on-demand SSB SCell. Upon receiving the first indication information, the terminal 101 may determine, according to the first indication information, whether the first SCell is an on-demand SSB SCell.

In some embodiments, the first indication information may be a newly defined information element (IE), and the first indication information may be included in one of: a serving cell common configuration (ServingCellConfigCommon); a serving cell configuration (ServingCellConfig); or an SCell configuration (ScellConfig). For example, the first indication information in an Scell addition RRC signaling indicates whether the Scell is a normal SCell or an on-demand required SSB SCell (or in other names, which are not specifically limited in the present disclosure), that is, it is used to indicate whether the Scell is an Scell of which the SSB is sent based on a request. For example, a new IE is defined in the ServingCellConfigCommon to indicate whether the Scell is an on-demand SSB SCell. Alternatively, a new IE is defined in the ServingCellConfig to indicate whether the Scell is an on-demand SSB SCell. Alternatively, a new IE is defined in the ScellConfig to indicate whether the Scell is an on-demand SSB SCell. For example, the name of the first indication information may be SSBstate (or other names, which are not specifically limited in the present disclosure), and a value of the SSBstate may be set as "required", which indicates that the corresponding Scell is an on-demand SSB SCell. It should be noted that the above value of "required" is only an example of the value of the first indication information, which may be implemented in other forms, and is not specifically limited in the present disclosure.

In step S2302, the terminal 101 determines, according to the first indication information, that the first SCell is an on-demand SSB SCell.

In some embodiments, the terminal 101 receives the first indication information sent by the network device 102, and determines, according to the first indication information, whether the first SCell is an on-demand SSB SCell. For example, the first indication information has a first value, indicating that the first SCell is an on-demand SSB SCell, or the first indication information has a second value, indicating that the first SCell is a normal cell (e.g., not an on-demand SSB SCell). The terminal 101 receives the first indication information sent by the network device 102, if the first indication information has the first value, it is determined that the first SCell is an on-demand SSB SCell; if the first indication information has the second value, it is determined that the first SCell is a normal cell (e.g., not an on-demand SSB SCell). That is, the network device 102 can indicate whether an SCell (e.g., the first SCell) is an on-demand SSB SCell through the first indication information.

In step S2303, the terminal 101 sends second indication information to the network device 102 via a second cell, and the second indication information is configured to instruct the network device 102 to send the SSB in the first SCell.

In some embodiments, the second cell and the first SCell are aggregated in carriers.

In some embodiments, the second indication information may be sent by the terminal 101. For example, the second indication information may be sent by the terminal 101 to the network device 102, that is, the terminal 101 sends the second indication information to the network device 102, and correspondingly, the network device 102 receives the second indication information sent by the terminal 101.

In some embodiments, the second indication information may be sent by the terminal 101 via the second cell. For example, the second indication information may be sent by the terminal 101 to the network device 102 via the second cell, that is, the terminal 101 sends the second indication information to the network device 102 via the second cell, and correspondingly, the network device 102 receives the second indication information sent by the terminal 101 via the second cell. For example, the terminal 101 sending the second indication information via the second cell may mean that the terminal 101 sends the second indication information using an uplink grant (UL grant) configured by the second cell for the terminal 101.

For optional implementation manners of the step S2303, reference may be made to the optional implementation manners of the step S2102 in FIG. 2A and other related parts in the embodiments involved in FIG. 2A, which will not be elaborated here.

Optionally, in some embodiments, before the terminal 101 sends the second indication information, the method may further include a step S2304, that is, the terminal 101 may first detect whether an SSB is sent in the first SCell, or in other words, the terminal 101 may first detect whether the network device 102 sends the SSB of the first SCell, here the network device 102 sending the SSB of the first SCell may refer to that the network device 102 sends the SSB in the first SCell. For optional implementation manners of the step S2304, reference may be made to the optional implementation manners of the step S2103 in FIG. 2A and other related parts in the embodiments involved in FIG. 2A, which will not be elaborated here.

Optionally, in some embodiments, the method may further include a step S2305, that is, the network device 102 sends the SSB in the first SCell. For example, the network device 102 sends the SSB in the first SCell, and correspondingly, the terminal 101 receives the SSB sent by network device 102 in the first SCell. For optional implementation manners of the step S2305, reference may be made to the optional implementation manners of the step S2104 in FIG. 2A and other related parts in the embodiments involved in FIG. 2A, which will not be elaborated here.

The method involved in embodiments of the present disclosure may include at least one of the steps S2301 to S2305. For example, the step S2301 + the step S2302 may be implemented as an independent embodiment, the step S2303 may be implemented as an independent embodiment, the step S2301 + the step S2302 + the step S2303 may be implemented as an independent embodiment, the step S2303 + the step S2304 may be implemented as an independent embodiment, the step S2303 + the step S2304 + the step S2305 may be implemented as an independent embodiment, the step S2303 + the step S2305 may be implemented as an independent embodiment, the step S2301 + the step S2302 + the step S2303 + the step S2305 may be implemented as an independent embodiment, or the step S2301 + the step S2302 + the step S2303 + the step S2304 + the step S2305 may be implemented as an independent embodiment, but the present disclosure is not limited thereto.

In some embodiments, the steps S2303 to S2305 are optional, and one or more of these steps may be omitted or replaced in different embodiments.

In some embodiments, the step S2301, the step S2302, the step S2304, and the step S2305 are optional, and one or more of these steps may be omitted or replaced in different embodiments.

In some embodiments, the step S2304 and the step S2305 are optional, and one or more of these steps may be omitted or replaced in different embodiments.

In some embodiments, the step S2301, the step S2302, and the step S2305 are optional, and one or more of these steps may be omitted or replaced in different embodiments.

In some embodiments, the step S2301 and the step S2302 are optional, and one or more of these steps may be omitted or replaced in different embodiments.

In some embodiments, the step S2301, the step S2302, and the step S2304 are optional, and one or more of these steps may be omitted or replaced in different embodiments.

In some embodiments, the step S2304 is optional, and one or more of these steps may be omitted or replaced in different embodiments.

In some embodiments, reference may be made to other optional implementation manners described before or after the description corresponding to FIG. 2C.

FIG. 2D is a schematic interactive diagram of a communication method according to embodiments of the present disclosure. As shown in FIG. 2D, the communication method according to embodiments of the present disclosure may be applied to the communication system 100, and the method includes, but is not limited to, the following steps.

In step S2401, a network device 102 sends first indication information.

In some embodiments, the first indication information may be sent by the network device 102 to a terminal 101. For example, the network device 102 sends the first indication information to the terminal 101, and correspondingly, the terminal 101 receives the first indication information. For example, the terminal 101 receives the first indication information sent by the network device 102.

In some embodiments, the first indication information indicates whether a first SCell is an on-demand SSB SCell. For example, the first indication information is used by the terminal 101 to determine whether the first SCell is an on-demand SSB SCell.

For optional implementation manners of the step S2401, reference may be made to the optional implementation manners of the step S2301 in FIG. 2C and other related parts in the embodiments involved in FIG. 2C, which will not be elaborated here.

In step S2402, the terminal 101 determines, according to the first indication information, that the first SCell is an on-demand SSB SCell.

For optional implementation manners of the step S2402, reference may be made to the optional implementation manners of the step S2302 in FIG. 2C and other related parts in the embodiments involved in FIG. 2C, which will not be elaborated here.

In step S2403, the terminal 101 sends first information to the network device 102 in the first SCell, and the first information is configured to instruct the network device 102 to send an SSB in the first SCell.

In some embodiments, the first information may be sent by the terminal 101 in the first SCell. For example, the first information may be sent by the terminal 101 in the first SCell to the network device 102, that is, the terminal 101 sends the first information to the network device 102 in the first SCell, and correspondingly, the network device 102 receives the first information sent by the terminal 101 in the first SCell.

For optional implementation manners of the step S2403, reference may be made to the optional implementation manners of the step S2202 in FIG. 2B and other related parts in the embodiments involved in FIG. 2B, which will not be elaborated here.

Optionally, in some embodiments, before the terminal 101 sends the first information, the method may further include a step S2404, that is, the terminal 101 may first detect whether an SSB is sent in the first SCell, or the terminal 101 may first detect whether the network device 102 sends the SSB of the first SCell, here the network device 102 sending the SSB of the first SCell may refer to that the network device 102 sends the SSB in the first SCell. For optional implementation manners of the step S2404, reference may be made to the optional implementation manners of the step S2203 in FIG. 2B and other related parts of the embodiments involved in FIG. 2B, which will not be elaborated here.

Optionally, in some embodiments, the method may further include a step S2405, that is, the network device 102 sends the SSB in the first SCell. For example, the network device 102 sends the SSB in the first SCell, and correspondingly, the terminal 101 receives the SSB sent by network device 102 in the first SCell. For optional implementation manners, reference may be made to the optional implementation manners of the step S2204 in FIG. **2**B and other related parts of the embodiments involved in FIG. 2B, which will not be elaborated here.

The method involved in embodiments of the present disclosure may include at least one of the steps S2401 to S2405. For example, the step S2401 + the step S2402 may be implemented as an independent embodiment, the step S2403 may be implemented as an independent embodiment, the step S2401 + the step S2402 + the step S2403 may be implemented as an independent embodiment, the step S2403 + the step S2404 may be implemented as an independent embodiment, the step S2403 + the step S2404 + the step S2405 may be implemented as an independent embodiment, the step S2403 + the step S2405 may be implemented as an independent embodiment, the step S2401 + the step S2402 + the step S2403 + the step S2405 may be implemented as an independent embodiment, or the step S2401 + the step S2402 + the step S2403 + the step S2404 + the step S2405 may be implemented as an independent embodiment, but the present disclosure is not limited thereto.

In some embodiments, the steps S2403 to S2405 are optional, and one or more of these steps may be omitted or replaced in different embodiments.

In some embodiments, the step S2401, the step S2402, the step S2404, and the step S2405 are optional, and one or more of these steps may be omitted or replaced in different embodiments.

In some embodiments, the step S2404 and the step S2405 are optional, and one or more of these steps may be omitted or replaced in different embodiments.

In some embodiments, the step S2401, the step S2402, and the step S2405 are optional, and one or more of these steps may be omitted or replaced in different embodiments.

In some embodiments, the step S2401 and the step S2402 are optional, and one or more of these steps may be omitted or replaced in different embodiments.

In some embodiments, the step S2401, the step S2402, and the step S2404 are optional, and one or more of these steps may be omitted or replaced in different embodiments.

In some embodiments, the step S2404 is optional, and one or more of these steps may be omitted or replaced in different embodiments.

In some embodiments, reference may be made to other optional implementation manners described before or after the description corresponding to FIG. 2D.

FIG. 3A is a schematic flowchart of a communication method according to embodiments of the present disclosure. As shown in FIG. 3A, embodiments of the present disclosure relate to a communication method, which may be performed by a terminal 101 and may include, but is not limited to, the following steps.

In step S3101, it is determined, based on implementation of the terminal 101, that a first SCell is an on-demand SSB SCell.

For optional implementation manners of the step S3101, reference may be made to the optional implementation manners of the step S2101 in FIG. 2A and other related parts in the embodiments involved in FIG. 2A, which will not be elaborated here.

In step S3102, it is detected whether an SSB is sent in the first SCell, or it is detected whether a network device 102 sends the SSB of the first SCell, here the network device 102 sending the SSB of the first SCell may refer to that the network device 102 sends the SSB in the first SCell.

For optional implementation manners of the step S3102, reference may be made to the optional implementation manners of the step S2103 in FIG. 2A and other related parts in the embodiments involved in FIG. 2A, which will not be elaborated here.

In step S3103, second indication information is sent to the network device 102 via a second cell, and the second indication information is used to instruct the network device 102 to send the SSB in the first SCell.

In some embodiments, the second indication information may be sent by the terminal 101. For example, the second indication information may be sent by the terminal 101 to the network device 102, that is, the terminal 101 sends the second indication information to the network device 102, and correspondingly, the network device 102 receives the second indication information sent by the terminal 101.

In some embodiments, the second indication information may be sent by the terminal 101 via the second cell. For example, the second indication information may be sent by the terminal 101 to the network device 102 via the second cell, that is, the terminal 101 sends the second indication information to the network device 102 via the second cell, and correspondingly, the network device 102 receives the second indication information sent by the terminal 101 via the second cell.

For optional implementation manners of the step S3103, reference may be made to the optional implementation manners of the step S2102 in FIG. 2A and other related parts in the embodiments involved in FIG. 2A, which will not be elaborated here.

In step S3104, the SSB sent by the network device 102 in the first SCell is received.

For example, the network device 102 sends the SSB in the first SCell, and correspondingly, the terminal 101 receives the SSB sent by the network device 102 in the first SCell.

For optional implementation manners of the step S3104, reference may be made to the optional implementation manners of the step S2104 in FIG. 2A and other related parts in the embodiments involved in FIG. 2A, which will not be elaborated here.

The method involved in embodiments of the present disclosure may include at least one of the steps S3101 to S3104. For example, the step S3101 may be implemented as an independent embodiment, the step S3103 may be implemented as an independent embodiment, the step S3101 + the step S3103 may be implemented as an independent embodiment, the step S3102 + the step S3103 may be implemented as an independent embodiment, the step S3101 + the step S3102 + the step S3103 may be implemented as an independent embodiment, the step S3102 + the step S3103 + the step S3104 may be implemented as an independent embodiment, the step S3101 + the step S3103 + the step S3104 may be implemented as an independent embodiment, the step S3101 + the step S3102 + the step S3103 + the step S3104 may be implemented as an independent embodiment, or the step S3103 + the step S3104 may be implemented as an independent embodiment, but the present disclosure is not limited thereto.

In some embodiments, the steps S3102 to S3104 are optional, and one or more of these steps may be omitted or replaced in different embodiments.

In some embodiments, the step S3101, the step S3102, and the step S3104 are optional, and one or more of these steps may be omitted or replaced in different embodiments.

In some embodiments, the step S3102 and the step S3104 are optional, and one or more of these steps may be omitted or replaced in different embodiments.

In some embodiments, the step S3101 and the step S3104 are optional, and one or more of these steps may be omitted or replaced in different embodiments.

In some embodiments, the step S3101 and the step S3102 are optional, and one or more of these steps may be omitted or replaced in different embodiments.

In some embodiments, the step S3104 is optional, and one or more of these steps may be omitted or replaced in different embodiments.

In some embodiments, the step S3101 is optional, and one or more of these steps may be omitted or replaced in different embodiments.

In some embodiments, the step S3102 is optional, and one or more of these steps may be omitted or replaced in different embodiments.

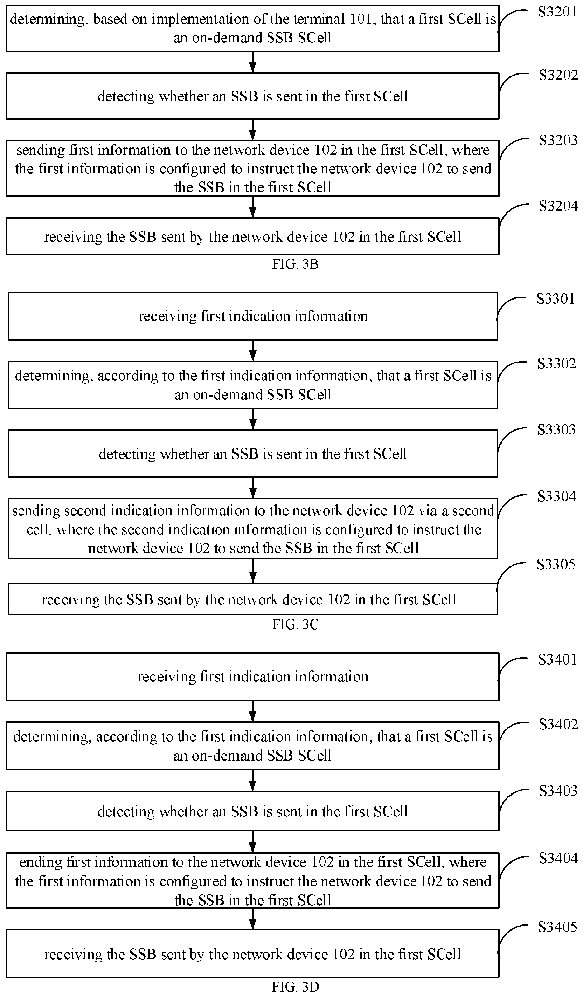

FIG. 3B is a schematic flowchart of a communication method according to embodiments of the present disclosure. As shown in FIG. 3B, embodiments of the present disclosure relate to a communication method, which may be performed by a terminal 101 and may include, but is not limited to, the following steps.

In step S3201, it is determined, based on implementation of the terminal 101, that a first SCell is an on-demand SSB SCell.

For optional implementation manners of the step S3201, reference may be made to the optional implementation manners of the step S2101 in FIG. 2A and other related parts in the embodiments involved in FIG. 2A, which will not be elaborated here.

In step S3202, it is detected whether an SSB is sent in the first SCell, or it is detected whether a network device 102 sends the SSB of the first SCell, here the network device 102 sending the SSB of the first SCell may refer to that the network device 102 sends the SSB in the first SCell.

For optional implementation manners of the step S3202, reference may be made to the optional implementation manners of the step S2203 in FIG. 2B and other related parts in the embodiments involved in FIG. 2B, which will not be elaborated here.

In step S3203, first information is sent to the network device 102 in the first SCell, and the first information is used to instruct the network device 102 to send the SSB in the first SCell.

For optional implementation manners of the step S3202, reference may be made to the optional implementation manners of the step S2202 in FIG. 2B and other related parts in the embodiments involved in FIG. 2B, which will not be elaborated here.

In step S3204, the SSB sent by the network device 102 in the first SCell is received.

For example, the network device 102 sends the SSB in the first SCell, and correspondingly, the terminal 101 receives the SSB sent by the network device 102 in the first SCell.

For optional implementation manners of the step S3203, reference may be made to the optional implementation manners of the step S2204 in FIG. 2B and other related parts in the embodiments involved in FIG. 2B, which will not be elaborated here.

The method involved in embodiments of the present disclosure may include at least one of the steps S3201 to S3204. For example, the step S3201 may be implemented as an independent embodiment, the step S3203 may be implemented as an independent embodiment, the step S3201 + the step S3203 may be implemented as an independent embodiment, the step S3202 + the step S3203 may be implemented as an independent embodiment, the step S3201 + the step S3202 + the step S3203 may be implemented as an independent embodiment, the step S3202 + the step S3203 + the step S3204 may be implemented as an independent embodiment, the step S3201 + the step S3203 + the step S3204 may be implemented as an independent embodiment, the step S3201 + the step S3202 + the step S3203 + the step S3204 may be implemented as an independent embodiment, or the step S3203 + the step S3204 may be implemented as an independent embodiment, but the present disclosure is not limited thereto.

In some embodiments, the steps S3202 to S3204 are optional, and one or more of these steps may be omitted or replaced in different embodiments.

In some embodiments, the step S3201, the step S3202, and the step S3204 are optional, and one or more of these steps may be omitted or replaced in different embodiments.

In some embodiments, the step S3202 and the step S3204 are optional, and one or more of these steps may be omitted or replaced in different embodiments.

In some embodiments, the step S3201 and the step S3204 are optional, and one or more of these steps may be omitted or replaced in different embodiments.

In some embodiments, the step S3201 and the step S3202 are optional, and one or more of these steps may be omitted or replaced in different embodiments.

In some embodiments, the step S3204 is optional, and one or more of these steps may be omitted or replaced in different embodiments.

In some embodiments, the step S3201 is optional, and one or more of these steps may be omitted or replaced in different embodiments.

In some embodiments, the step S3202 is optional, and one or more of these steps may be omitted or replaced in different embodiments.

FIG. 3C is a schematic flowchart of a communication method according to embodiments of the present disclosure. As shown in FIG. 3C, embodiments of the present disclosure relate to a communication method, which may be performed by a terminal 101 and may include, but is not limited to, the following steps.

In step S3301, first indication information is received.

In some embodiments, the first indication information may be sent by a network device 102 to the terminal 101. For example, the network device 102 sends the first indication information to the terminal 101, and correspondingly, the terminal 101 receives the first indication information. For example, the terminal 101 receives the first indication information sent by the network device 102.

In some embodiments, the first indication information indicates whether a first SCell is an on-demand SSB SCell. For example, the first indication information is used by the terminal 101 to determine whether the first SCell is an on-demand SSB SCell.

For optional implementation manners of the step S3301, reference may be made to the optional implementation manners of the step S2301 in FIG. 2C and other related parts in the embodiments involved in FIG. 2C, which will not be elaborated here.

In step S3302, it is determined, according to the first indication information, that the first SCell is an on-demand SSB SCell.

For optional implementation manners of the step S3302, reference may be made to the optional implementation manners of the step S2302 in FIG. 2C and other related parts in the embodiments involved in FIG. 2C, which will not be elaborated here.

In step S3303, it is detected whether an SSB is sent in the first SCell, or it is detected whether a network device 102 sends the SSB of the first SCell, here the network device 102 sending the SSB of the first SCell may refer to that the network device 102 sends the SSB in the first SCell.

For optional implementation manners of the step S3303, reference may be made to the optional implementation manners of the step S2304 in FIG. 2C and other related parts in the embodiments involved in FIG. 2C, which will not be elaborated here.

In step S3304, second indication information is sent to the network device 102 via a second cell, and the second indication information is used to instruct the network device 102 to send the SSB in the first SCell.

In some embodiments, the second cell and the first SCell are aggregated in carriers.

In some embodiments, the second indication information may be sent by the terminal 101. For example, the second indication information may be sent by the terminal 101 to the network device 102, that is, the terminal 101 sends the second indication information to the network device 102, and correspondingly, the network device 102 receives the second indication information sent by the terminal 101.

In some embodiments, the second indication information may be sent by the terminal 101 via the second cell. For example, the second indication information may be sent by the terminal 101 to the network device 102 via the second cell, i.e., the terminal 101 sends the second indication information to the network device 102 via the second cell, and correspondingly, the network device 102 receives the second indication information sent by the terminal 101 via the second cell. For example, the terminal 101 sending the second indication information via the second cell may refer to that the terminal 101 sends the second indication information using an uplink grant (UL grant) configured by the second cell for the terminal 101.

For optional implementation manners of the step S3304, reference may be made to the optional implementation manners of the step S2303 in FIG. 2C and other related parts in the embodiments involved in FIG. 2C, which will not be elaborated here.

In step S3305, the SSB sent by the network device 102 in the first SCell is received.

For example, the network device 102 sends the SSB in the first SCell, and correspondingly, the terminal 101 receives the SSB sent by the network device 102 in the first SCell.

For optional implementation manners of the step S3305, reference may be made to the optional implementation manners of the step S2305 in FIG. 2C and other related parts in the embodiments involved in FIG. 2C, which will not be elaborated here.

The method involved in embodiments of the present disclosure may include at least one of the steps S3301 to S3305. For example, the step S3301 + the step S3302 may be implemented as an independent embodiment, the step S3304 may be implemented as an independent embodiment, the step S3301 + the step S3302 + the step S3304 may be implemented as an independent embodiment, the step S3303 + the step S3304 may be implemented as an independent embodiment, the step S3303 + the step S3304 + the step S3305 may be implemented as an independent embodiment, the step S3304 + the step S3305 may be implemented as an independent embodiment, the step S3301 + the step S3302 + the step S3304 + the step S3305 may be implemented as an independent embodiment, or the step S3301 + the step S3302 + the step S3303 + the step S3304 + the step S3305 may be implemented as an independent embodiment, but the present disclosure is not limited thereto.

In some embodiments, the steps S3303 to S3305 are optional, and one or more of these steps may be omitted or replaced in different embodiments.

In some embodiments, the step S3301, the step S3302, the step S3303, and the step S3305 are optional, and one or more of these steps may be omitted or replaced in different embodiments.

In some embodiments, the step S3303 and the step S3305 are optional, and one or more of these steps may be omitted or replaced in different embodiments.

In some embodiments, the step S3301, the step S3302, and the step S3305 are optional, and one or more of these steps may be omitted or replaced in different embodiments.

In some embodiments, the step S3301 and the step S3302 are optional, and one or more of these steps may be omitted or replaced in different embodiments.

In some embodiments, the step S3301, the step S3302, and the step S3303 are optional, and one or more of these steps may be omitted or replaced in different embodiments.

In some embodiments, the step S3303 is optional, and one or more of these steps may be omitted or replaced in different embodiments.

FIG. 3D is a schematic flowchart of a communication method according to embodiments of the present disclosure. As shown in FIG. 3D, embodiments of the present disclosure relate to a communication method, which may be performed by a terminal 101 and may include, but is not limited to, the following steps.

In step S3401, first indication information is received.

In some embodiments, the first indication information may be sent by a network device 102 to the terminal 101. For example, the network device 102 sends the first indication information to the terminal 101, and correspondingly, the terminal 101 receives the first indication information. For example, the terminal 101 receives the first indication information sent by the network device 102.

In some embodiments, the first indication information indicates whether a first SCell is an on-demand SSB SCell. For example, the first indication information is used by the terminal 101 to determine whether the first SCell is an on-demand SSB SCell.

For optional implementation manners of the step S3401, reference may be made to the optional implementation manners of the step S2301 in FIG. 2C and other related parts in the embodiments involved in FIG. 2C, which will not be elaborated here.

In step S3402, it is determined, according to the first indication information, that the first SCell is an on-demand SSB SCell.

For optional implementation manners of the step S3402, reference may be made to the optional implementation manners of the step S2302 in FIG. 2C and other related parts in the embodiments involved in FIG. 2C, which will not be elaborated here.

In step S3403, it is detected whether an SSB is sent in the first SCell, or it is detected whether a network device 102 sends the SSB of the first SCell, here the network device 102 sending the SSB of the first SCell may refer to that the network device 102 sends the SSB in the first SCell.

For optional implementation manners of the step S3403, reference may be made to the optional implementation manners of the step S2404 in FIG. 2C and other related parts in the embodiments involved in FIG. 2C, which will not be elaborated here.

In step S3404, first information is sent to the network device 102 in the first SCell, and the first information is used to instruct the network device 102 to send the SSB in the first SCell.

In some embodiments, the first information may be sent by the terminal 101 in the first SCell. For example, the first information may be sent by the terminal 101 in the first SCell to the network device 102, that is, the terminal 101 sends the first information to the network device 102 in the first SCell, and correspondingly, the network device 102 receives the first information sent by the terminal 101 in the first SCell.

For optional implementation manners of the step S3404, reference may be made to the optional implementation manners of the step S2202 in FIG. 2B and other related parts in the embodiments involved in FIG. 2B, which will not be elaborated here.

In step S3405, the SSB sent by the network device 102 in the first SCell is received.

For example, the network device 102 sends the SSB in the first SCell, and correspondingly, the terminal 101 receives the SSB sent by the network device 102 in the first SCell.

For optional implementation manners of the step S3405, reference may be made to the optional implementation manners of the step S2204 in FIG. 2B and other related parts in the embodiments involved in FIG. 2B, which will not be elaborated here.

The method involved in embodiments of the present disclosure may include at least one of the steps S3401 to S3405. For example, the step S3401 + the step S3402 may be implemented as an independent embodiment, the step S3404 may be implemented as an independent embodiment, the step S3401 + the step S3402 + the step S3404 may be implemented as an independent embodiment, the step S3403 + the step S3404 may be implemented as an independent embodiment, the step S3403 + the step S3404 + the step S3405 may be implemented as an independent embodiment, the step S3404 + the step S3405 may be implemented as an independent embodiment, the step S3401 + the step S3402 + the step S3404 + the step S3405 may be implemented as an independent embodiment, or the step S3401 + the step S3402 + the step S3403 + the step S3404 + the step S3405 may be implemented as an independent embodiment, but the present disclosure is not limited thereto.

In some embodiments, the steps S3403 to S3405 are optional, and one or more of these steps may be omitted or replaced in different embodiments.

In some embodiments, the step S3401, the step S3402, the step S3403, and the step S3405 are optional, and one or more of these steps may be omitted or replaced in different embodiments.

In some embodiments, the step S3403 and the step S3405 are optional, and one or more of these steps may be omitted or replaced in different embodiments.

In some embodiments, the step S3401, the step S3402, and the step S3405 are optional, and one or more of these steps may be omitted or replaced in different embodiments.

In some embodiments, the step S3401 and the step S3402 are optional, and one or more of these steps may be omitted or replaced in different embodiments.

In some embodiments, the step S3401, the step S3402, and the step S3403 are optional, and one or more of these steps may be omitted or replaced in different embodiments.

In some embodiments, the step S3403 is optional, and one or more of these steps may be omitted or replaced in different embodiments.

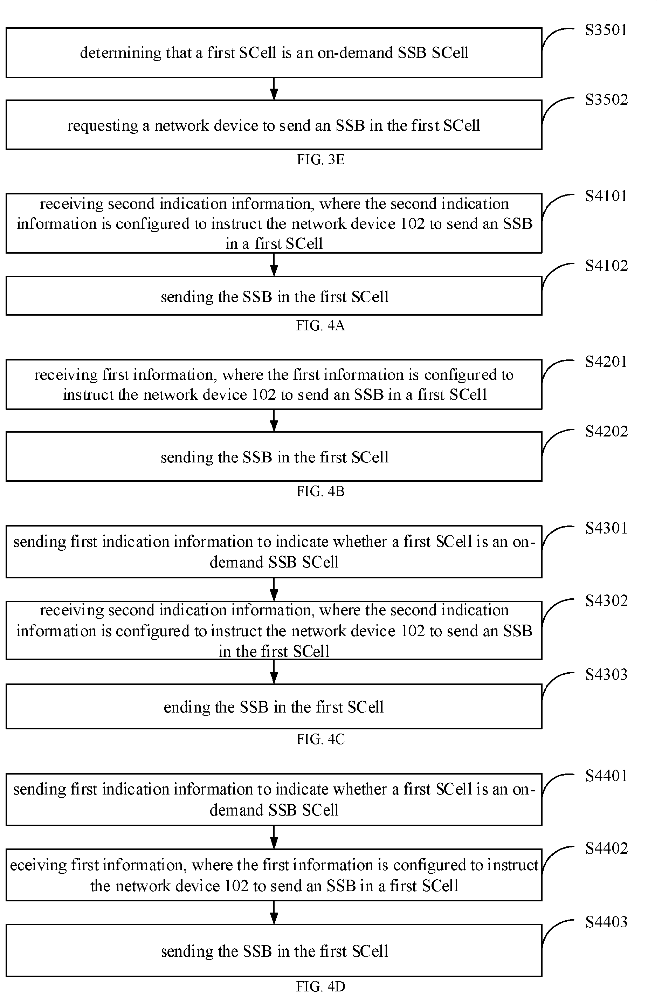

FIG. 3E is a schematic flowchart of a communication method according to embodiments of the present disclosure. As shown in FIG. 3E, embodiments of the present disclosure relate to a communication method, which may be performed by a terminal 101 and may include, but is not limited to, the following steps.

In step S3501, it is determined that a first secondary cell (SCell) is an on-demand SSB SCell.

In some embodiments, a possible implementation manner for determining that the first SCell is the on-demand SSB SCell includes: determining, based on implementation of the terminal, that the first SCell is the on-demand SSB SCell. In a possible implementation manner, it is determined that the first SCell is the on-demand SSB SCell, in a case where an SSB of the first SCell is not detected at a reception occasion of the SSB of the first SCell.

In some embodiments, a possible implementation manner for determining that the first SCell is the on-demand SSB SCell includes: receiving first indication information sent by a network device, where the first indication information is configured to indicate whether the first SCell is the on-demand SSB SCell; and determining, according to the first indication information, that the first SCell is the on-demand SSB SCell.

In some embodiments, the first indication information is a newly defined information element (IE), and the first indication information is included in one of: a serving cell common configuration (ServingCellConfigCommon); a serving cell configuration (ServingCellConfig); or an SCell configuration (ScellConfig).

In step S3502, the network device 102 is request to send the SSB in the first SCell.

In some embodiments, a possible implementation manner for requesting a network device 102 to send the SSB in the first SCell includes: sending second indication information to the network device 102 via a second cell, the second indication information is configured to instruct the network device 102 to send the SSB in the first SCell; and the second cell and the first SCell are aggregated in carriers. Optionally, in some embodiments, before the terminal 101 sends the second indication information, the terminal 101 may first detect whether the SSB is sent in the first SCell, or detect whether the network device 102 sends the SSB of the first SCell, here the network device 102 sending the SSB of the first SCell may refer to that the network device 102 sends the SSB in the first SCell.

In some embodiments, the terminal 101 receives a first radio resource control (RRC) signaling sent by network device 102, and the first RRC signaling indicates at least one SCell. A possible implementation manner for sending the second indication information to the network device 102 via the second cell includes: sending the second indication information to the network device 102 via the second cell, in a case where the at least one SCell includes the first SCell.

In some embodiments, the first RRC signaling is an SCell addition and/or modification signaling.

In some embodiments, the second indication information is a second RRC signaling, the second RRC signaling includes respective identifiers of one or more SCells of the at least one SCell and/or respective SSB request indications for the one or more SCells; and the one or more SCells include the first SCell.

In some embodiments, the second indication information is a MAC-CE. The MAC-CE includes a first bitmap indicating whether SSB transmission in a corresponding SCell is requested, the first bitmap includes one or more first indication bits, the one or more first indication bits each indicate whether SSB transmission in a respective SCell is requested, and the one or more first indication bits have a one-to-one correspondence with the at least one SCell.

Alternatively, the MAC-CE includes a second bitmap indicating whether SSB transmission in one or more third cells is requested, the second bitmap includes one or more second indication bits, the one or more second indication bits each indicate whether SSB transmission in a respective third cell is requested, the one or more second indication bits have a one-to-one correspondence with the one or more third cells, the one or more third cells are one or more on-demand SSB SCells among the at least one SCell, and the one or more third cells include the first SCell.

In some embodiments, the terminal 101 receives an SCell activation/deactivation MAC CE sent by the network device 102, and the SCell activation/deactivation MAC CE includes, for each SCell of at least one SCell, an activation/deactivation indication bit. A possible implementation manner for sending the second indication information to the network device 102 via the second cell includes: sending the second indication information to the network device 102 via the second cell, in a case where the at least one SCell includes the first SCell, and the first SCell is an activated SCell.

In some embodiments, a possible implementation manner for sending the second indication information to the network device 102 via the second cell includes: determining that time-frequency synchronization with the first SCell is needed; and sending the second indication information to the network device 102 via the second cell.

In some embodiments, a possible implementation manner for sending the second indication information to the network device 102 via the second cell includes: determining that layer 1/layer 3 measurement on the first SCell is needed; and sending the second indication information to the network device 102 via the second cell.

In some embodiments, a possible implementation manner for requesting the network device to 102 send the SSB in the first SCell includes: sending first information to the network device 102 in the first SCell, and the first information is configured to instruct the network device 102 to send the SSB in the first SCell. Optionally, in some embodiments, before the terminal 101 sends the first information, the terminal 101 may first detect whether the SSB is sent in the first SCell, or detect whether the network device 102 sends the SSB of the first SCell, here the network device 102 sending the SSB of the first SCell may refer to that the network device 102 sends the SSB in the first SCell.

In some embodiments, the terminal 101 obtains a configuration of the first information associated with the first SCell from a system information block (SIB) or a dedicated radio resource control (RRC) signaling.

In some embodiments, a possible implementation manner for sending the first information to the network device 102 includes: sending the first information to the network device 102 according to the configuration of the first information associated with the first SCell.

In some embodiments, the configuration of the first information associated with the first SCell includes at least one of: an initial transmission power of the first information or a parameter for calculating an initial transmission power; a power increasing step size of the first information; a maximum number of times the first information is sent; a preamble index or sequence reserved for the first information; configuration information of a random access occasion (RO) resource for sending the first information; or a configuration of a timer, where the timer is configured to indicate a duration for which the terminal 101 monitors the SSB sent in the first SCell, and configured for the terminal 101 to determine whether to resend the first information.

In some embodiments, the terminal 101 receives a random access response MAC PDU including a header with an RAPID of the preamble index or sequence, and determines that the network device acknowledges a request for the SSB in the first SCell.

For implementation manners of the method performed at the terminal side involved in embodiments of the present disclosure, reference may be made to the description of the relevant steps of the terminal 101 in FIG. 2A to FIG. 2D above, which will not be elaborated here.

FIG. 4A is a schematic flowchart of a communication method according to embodiments of the present disclosure. As shown in FIG. 4A, embodiments of the present disclosure relate to a communication method, which may be performed by a network device 102 and may include, but is not limited to, the following steps.

In step S4101, second indication information is received.

In some embodiments, the second indication information may be sent by a terminal 101. For example, the second indication information may be sent by the terminal 101 to the network device 102, that is, the terminal 101 sends the second indication information to the network device 102, and correspondingly, the network device 102 receives the second indication information sent by the terminal 101.

In some embodiments, the second indication information may be sent by the terminal 101 via a second cell. For example, the second indication information may be sent by the terminal 101 to the network device 102 via the second cell, that is, the terminal 101 sends the second indication information to the network device 102 via the second cell, and correspondingly, the network device 102 receives the second indication information sent by the terminal 101 via the second cell.

In some embodiments, in a case where the terminal 101 determines that a first SCell is an on-demand SSB SCell, the terminal 101 sends the second indication information to the network device 102 via the second cell, and the second indication information is configured to instruct the network device 102 to send an SSB in the first SCell.

For optional implementation manners of the step S4101, reference may be made to the optional implementation manners of the step S2102 in FIG. 2A and other related parts in the embodiments involved in FIG. 2A, which will not be elaborated here.

In step S4102, the SSB is sent in the first SCell. For example, the network device 102 sends the SSB to the terminal 101 in the first SCell, and correspondingly, the terminal 101 receives the SSB sent by the network device 102 in the first SCell. For example, the terminal 101 may receive the SSB sent by network device 102 in the first SCell via the second cell.

For optional implementation manners of the step S4102, reference may be made to the optional implementation manners of the step S2104 in FIG. 2A and other related parts in the embodiments involved in FIG. 2A, which will not be elaborated here.

The method involved in embodiments of the present disclosure may include at least one of the step S4101 and the step S4102. For example, the step S4101 may be implemented as an independent embodiment, and the step S4101 + the step S4102 may be implemented as an independent embodiment, but the present disclosure is not limited thereto.

In some embodiments, the step S4102 is optional, and one or more of these steps may be omitted or replaced in different embodiments.

FIG. 4B is a schematic flowchart of a communication method according to embodiments of the present disclosure. As shown in FIG. 4B, embodiments of the present disclosure relate to a communication method, which may be performed by a network device 102 and may include, but is not limited to, the following steps.

In step S4201, first information is received, and the first information is configured to instruct the network device 102 to send an SSB in a first SCell.

In some embodiments, the first information may be sent by a terminal 101 in the first SCell. For example, the first information may be sent by the terminal 101 in the first SCell to the network device 102, that is, the terminal 101 sends the first information to the network device 102 in the first SCell, and correspondingly, the network device 102 receives the first information sent by the terminal 101 in the first SCell.

For optional implementation manners of the step S4201, reference may be made to the optional implementation manners of the step S2202 in FIG. 2B and other related parts in the embodiments involved in FIG. 2B, which will not be elaborated here.

In step S4202, the SSB is sent in the first SCell. For example, the network device 102 sends the SSB in the first SCell, and correspondingly, the terminal 101 receives the SSB sent by the network device 102 in the first SCell.

For optional implementation manners of the step S4202, reference may be made to the optional implementation manners of the step S2204 in FIG. 2B and other related parts in the embodiments involved in FIG. 2B, which will not be elaborated here.

The method involved in embodiments of the present disclosure may include at least one of the step S4201 and the step S4202. For example, the step S4201 may be implemented as an independent embodiment, and the step S4201 + the step S4202 may be implemented as an independent embodiment, but the present disclosure is not limited thereto.

In some embodiments, the step S4202 is optional, and one or more of these steps may be omitted or replaced in different embodiments.

FIG. 4C is a schematic flowchart of a communication method according to embodiments of the present disclosure. As shown in FIG. 4C, embodiments of the present disclosure relate to a communication method, which may be performed by a network device 102 and may include, but is not limited to, the following steps.

In step S4301, first indication information is sent.

In some embodiments, the first indication information may be sent by the network device 102 to a terminal 101. For example, the network device 102 sends the first indication information to the terminal 101, and correspondingly, the terminal 101 receives the first indication information. For example, the terminal 101 receives the first indication information sent by the network device 102.

In some embodiments, the first indication information is configured to indicate whether a first SCell is an on-demand SSB SCell. For example, the first indication information is configured for the terminal 101 to determine whether the first SCell is the on-demand SSB SCell.

For optional implementation manners of the step S4301, reference may be made to the optional implementation manners of the step S2301 in FIG. 2C and other related parts in the embodiments involved in FIG. 2C, which will not be elaborated here.

In step S4302, second indication information is received, and the second indication information is configured to instruct the network device 102 to send an SSB in the first SCell.

In some embodiments, the second indication information may be sent by the terminal 101. For example, the second indication information may be sent by the terminal 101 to the network device 102, that is, the terminal 101 sends the second indication information to the network device 102, and correspondingly, the network device 102 receives the second indication information sent by the terminal 101.

In some embodiments, the second indication information may be sent by the terminal 101 via a second cell. For example, the second indication information may be sent by the terminal 101 to the network device 102 via the second cell, that is, the terminal 101 sends the second indication information to the network device 102 via the second cell, and correspondingly, the network device 102 receives the second indication information sent by the terminal 101 via the second cell. In some embodiments, the second cell and the first SCell are aggregated in carriers.

For optional implementation manners of the step S4302, reference may be made to the optional implementation manners of the step S2303 in FIG. 2C and other related parts in the embodiments involved in FIG. 2C, which will not be elaborated here.

In step S4303, the SSB is sent in the first SCell. For example, the network device 102 sends the SSB in the first SCell, and correspondingly, the terminal 101 receives the SSB sent by the network device 102 in the first SCell.

For optional implementation manners of the step S4303, reference may be made to the optional implementation manners of the step S2305 in FIG. 2C and other related parts in the embodiments involved in FIG. 2C, which will not be elaborated here.

The method involved in embodiments of the present disclosure may include at least one of the steps S4301 to S4303. For example, the step S4301 + the step S4302 may be implemented as an independent embodiment, and the step S4301 + the step S4302 + the step S4303 may be implemented as an independent embodiment, but the present disclosure is not limited thereto.

In some embodiments, the step S4303 is optional, and one or more of these steps may be omitted or replaced in different embodiments.

FIG. 4D is a schematic flowchart of a communication method according to embodiments of the present disclosure. As shown in FIG. 4D, embodiments of the present disclosure relate to a communication method, which may be performed by a network device 102 and may include, but is not limited to, the following steps.

In step S4401, first indication information is sent.

In some embodiments, the first indication information may be sent by the network device 102 to a terminal 101. For example, the network device 102 sends the first indication information to the terminal 101, and correspondingly, the terminal 101 receives the first indication information. For example, the terminal 101 receives the first indication information sent by the network device 102.

In some embodiments, the first indication information is configured to indicate whether a first SCell is an on-demand SSB SCell. For example, the first indication information is configured for the terminal 101 to determine whether the first SCell is the on-demand SSB SCell.

For optional implementation manners of the step S4401, reference may be made to the optional implementation manners of the step S2401 in FIG. 2D and other related parts of the embodiment involved in FIG. 2D, which will not be elaborated here.

In step S4402, first information is received, and the first information is configured to instruct the network device 102 to send an SSB in the first SCell.

In some embodiments, the first information may be sent by the terminal 101 in the first SCell. For example, the first information may be sent by the terminal 101 in the first SCell to the network device 102, that is, the terminal 101 sends the first information to the network device 102 in the first SCell, and correspondingly, the network device 102 receives the first information sent by the terminal 101 in the first SCell.

For optional implementation manners of the step S4402, reference may be made to the optional implementation manners of the step S2403 in FIG. 2D and other related parts in the embodiments involved in FIG. 2D, which will not be elaborated here.

In step S4403, the SSB is sent in the first SCell. For example, the network device 102 sends the SSB in the first SCell, and correspondingly, the terminal 101 receives the SSB sent by the network device 102 in the first SCell.

For optional implementation manners of the step S4403, reference may be made to the optional implementation manners of the step S2405 in FIG. 2D and other related parts in the embodiments involved in FIG. 2D, which will not be elaborated here.

The method involved in embodiments of the present disclosure may include at least one of the steps S3401 to S3403. For example, the step S3401 + the step S3402 may be implemented as an independent embodiment, and the step S3401 + the step S3402 + the step S3403 may be implemented as an independent embodiment, but the present disclosure is not limited thereto.

In some embodiments, the step S3403 is optional, and one or more of these steps may be omitted or replaced in different embodiments.

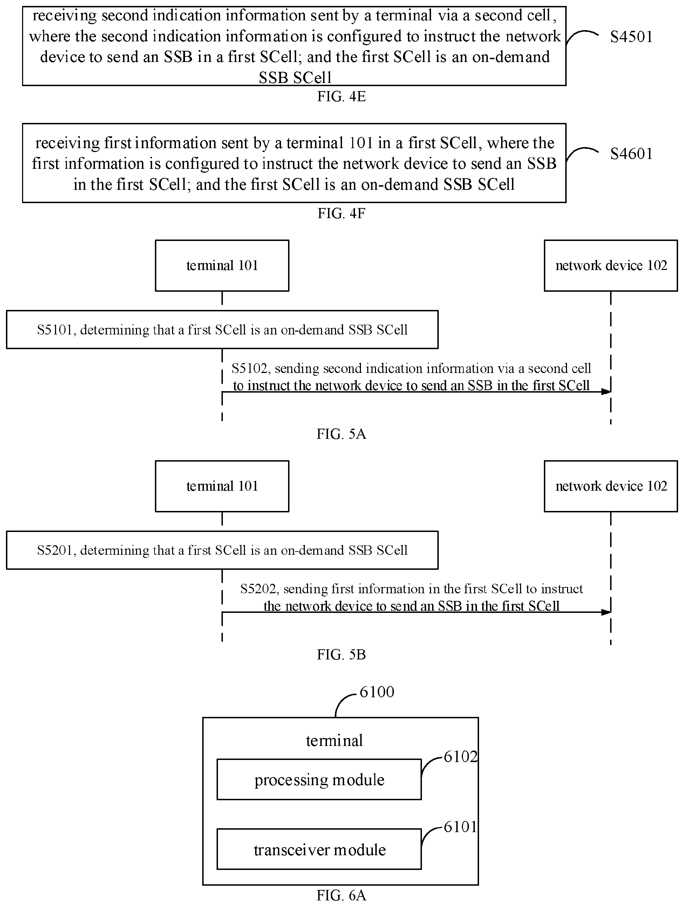

FIG. 4E is a schematic flowchart of a communication method according to embodiments of the present disclosure. As shown in FIG. 4E, embodiments of the present disclosure relate to a communication method, which may be performed by a network device 102 and may include, but is not limited to, the following steps.

In step S4501, second indication information sent by a terminal via a second cell is received, the second indication information is configured to instruct the network device to send an SSB in a first SCell; and the first SCell is an on-demand SSB SCell.

In some embodiments, the second cell and the first SCell are aggregated in carriers.

In some embodiments, a first RRC signaling is sent, the first RRC signaling indicates at least one SCell, and the at least one SCell includes the first SCell. In a case where the terminal 101 receives the first RRC signaling, the at least one SCell indicated by the first RRC signaling includes the first SCell, and the terminal 101 determines that the first SCell is the on-demand SSB SCell, the terminal 101 may send the second indication information to the network device 102 via the second cell. In some embodiments, the first RRC signaling is an SCell addition and/or modification signaling.

In some embodiments, the second indication information is a second RRC signaling, and the second RRC signaling includes respective identifiers of one or more SCells of the at least one SCell and/or respective SSB request indications for the one or more SCells; and the one or more SCells include the first SCell.

In some embodiments, the first SCell is an added and/or modified SCell, and the second indication information is a media access control-control element (MAC-CE). The MAC-CE includes a first bitmap indicating whether SSB transmission in a corresponding SCell is requested, the first bitmap includes one or more first indication bits, the one or more first indication bits each indicate whether SSB transmission in a respective SCell is requested, and the one or more first indication bits have a one-to-one correspondence with the at least one SCell. Alternatively, the MAC-CE includes a second bitmap indicating whether SSB transmission in one or more third cells is requested, the second bitmap includes one or more second indication bits, the one or more second indication bits each indicate whether SSB transmission in a respective third cell is requested, the one or more second indication bits have a one-to-one correspondence with the one or more third cells, the one or more third cells are one or more on-demand SSB SCells among the at least one SCell, and the one or more third cells include the first SCell.

In some embodiments, an SCell activation/deactivation MAC CE is sent, the SCell activation/deactivation MAC CE includes, for each SCell of at least one SCell, an activation/deactivation indication bit; and the at least one SCell includes the first SCell. For example, the terminal 101 receives the SCell activation/deactivation MAC CE, the SCell activation/deactivation MAC CE indicates activation of an SCell associated with SCellindex i, the SCell associated with the SCellindex i is included in the at least one SCell indicated in the first RRC signaling, and the SCell associated with the SCellindex i includes the first SCell, then the terminal 101 sends the second indication information to the network device 102 via the second cell to indicate to the network device that SSB transmission in the first SCell is needed.

In some embodiments, the first SCell associated in the second indication information is an SCell with which time-frequency synchronization is needed. For example, in a case where the terminal 101 determines that the first SCell is an SCell with which time-frequency synchronization is needed, the terminal 101 sends the second indication information to the network device 102 via the second cell to indicate to the network device that SSB transmission in the first SCell is needed.

In some embodiments, the first SCell associated in the second indication information is an SCell on which layer 1/layer 3 measurement is needed. For example, in a case where the terminal 101 determines that the first SCell is an SCell on which layer 1/layer 3 measurement is needed, the terminal 101 sends the second indication information to the network device 102 via the second cell to indicate to the network device that SSB transmission in the first SCell is needed.

In some embodiments, first indication information is sent to the terminal 101, the first indication information is configured to indicate whether the first SCell is the on-demand SSB SCell, and the first indication information is configured for the terminal to determine that the first SCell is the on-demand SSB SCell.

In some embodiments, the first indication information is a newly defined information element (IE), and the first indication information is included in one of: a serving cell common configuration (ServingCellConfigCommon); a serving cell configuration (ServingCellConfig); or an SCell configuration (ScellConfig).

For implementation manners of the method performed at the network device side involved in embodiments of the present disclosure, reference may be made to the description of the relevant steps of the network device 102 in FIG. 2A and FIG. 2C above, which will not be elaborated here.

FIG. 4F is a schematic flowchart of a communication method according to embodiments of the present disclosure. As shown in FIG. 4F, embodiments of the present disclosure relate to a communication method, which may be performed by a network device 102 and may include, but is not limited to, the following steps.

In step S4601, first information sent by a terminal 101 is received. The first information is sent by the terminal 101 in a first SCell, the first information is configured to instruct the network device to send an SSB in the first SCell; and the first SCell is an on-demand SSB SCell.

In some embodiments, an SIB or a dedicated RRC signaling is sent, and the SIB or the dedicated RRC signaling includes a configuration of the first information associated with the first SCell. The configuration of the first information associated with the first SCell may be used by the terminal 101 to send the first information to the network device 102 in the first SCell according to the configuration, to instruct the network device 102 to send the SSB in the first SCell.

In some embodiments, the configuration of the first information associated with the first SCell includes at least one of: an initial transmission power of the first information or a parameter for calculating an initial transmission power; a power increasing step size of the first information; a maximum number of times the first information is sent; a preamble index or sequence reserved for the first information; configuration information of a random access occasion (RO) resource for sending the first information; or a configuration of a timer, where the timer is configured to indicate a duration for which the terminal 101 monitors the SSB sent in the first SCell, and configured for the terminal 101 to determine whether to resend the first information.

In some embodiments, a random access response media access control protocol data unit (MAC PDU) is sent to the terminal 101, and the random access response MACPDU includes a header with a random access preamble identifier (RAPID) of the preamble index or sequence.

For implementation manners of the method performed at the network device side involved in embodiments of the present disclosure, reference may be made to the description of the relevant steps of the network device 102 in FIG. 2B and FIG. 2D above, which will not be elaborated here.

FIG. 5A is a schematic interactive diagram of a communication method according to embodiments of the present disclosure. As shown in FIG. 5A, the method involved in embodiments of the present disclosure may be applied to the communication system 100, and the method includes, but is not limited to, the following steps.

In step S5101, a terminal 101 determines that a first SCell is an on-demand SSB SCell.

For optional implementation manners of the step S5101, reference may be made to the step S2101 of FIG. 2A, the step S2201 of FIG. 2B, the step S2301 and the step S2302 of FIG. 2C, the step S2401 and the step S2402 of FIG. 2D, and other related parts in the embodiments involved in FIG. 2A to FIG. 2D, which will not be elaborated here.

In step S5102, the terminal 101 sends second indication information via a second cell, and the second indication information is configured to instruct the network device to send an SSB in the first secondary cell (SCell).

In some embodiments, the second cell and the first SCell are aggregated in carriers.

For optional implementation manners of the step S5102, reference may be made to the optional implementation manners of the step S2102 in FIG. 2A, the step S2303 in FIG. 2C, and other related parts in the embodiments involved in FIG. 2A and FIG. 2C, which will not be elaborated here.

Optionally, in some embodiments, before the terminal 101 sends the second indication information, the terminal 101 may first detect whether the SSB is sent in the first SCell, or detect whether the network device 102 sends the SSB of the first SCell, here the network device 102 sending the SSB of the first SCell may refer to that the network device 102 sends the SSB in the first SCell. For optional implementation manners, reference may be made to the optional implementation manners of the step S2103 of FIG. 2A and other related parts of the embodiments involved in FIG. 2A, which will not be elaborated here.

FIG. 5B is a schematic interactive diagram of a communication method according to embodiments of the present disclosure. As shown in FIG. 5B, the method according to embodiments of the present disclosure may be applied to the communication system 100, and the method includes, but is not limited to, the following steps.

In step S5201, a terminal 101 determines that a first SCell is an on-demand SSB SCell.

For optional implementation manners of the step S5201, reference may be made to the step S2101 of FIG. 2A, the step S2201 of FIG. 2B, the step S2301 and the step S2302 of FIG. 2C, the step S2401 and the step S2402 of FIG. 2D, and other related parts in the embodiments involved in FIG. 2A to FIG. 2D, which will not be elaborated here.

In step S5202, the terminal 101 sends first information to a network device 102 in the first SCell. The first information is configured to instruct the network device 102 to send an SSB in the first SCell.

For optional implementation manners of the step S5202, reference may be made to the optional implementation manners of the step S2202 of FIG. 2B, the step S2403 of FIG. 2D, and other related parts in the embodiments involved in FIG. 2B and FIG. 2D, which will not be elaborated here.

Optionally, in some embodiments, before the terminal 101 sends the second indication information, the terminal 101 may first detect whether the SSB is sent in the first SCell, or detect whether the network device 102 sends the SSB of the first SCell, here the network device 102 sending the SSB of the first SCell may refer to that the network device 102 sends the SSB in the first SCell. For optional implementation manners, reference may be made to the optional implementation manners of the step S2203 of FIG. 2B and other related parts of the embodiments involved in FIG. 2B, which will not be elaborated here.

In some embodiments, the above method may include the method as described in embodiments performed at the terminal side, the method as described in embodiments performed at the network device side, etc., which will not be elaborated here.

Embodiments of the present disclosure provide an SSB request method in a carrier aggregation scenario, which solves the problem of under what conditions and how a terminal should request SSB transmission in an on-demand SSB SCell in the carrier aggregation scenario.

In some embodiments, the terminal indicates to the network device through the second indication information that the SSB transmission in the SCell is needed. Before sending the second indication information, the terminal first detects whether the SSB is sent in the SCell.

For example, the terminal receives an RRC signaling for SCell addition, and the terminal indicates to the network device through the second indication information that it needs to request SSB transmission in the "added SCell". Before sending the second indication information, the terminal first detects whether the SSB is sent in the "added SCell". The second indication information may be an RRC signaling or a MAC CE. For example, the MAC CE may include a bitmap, and each bit in the bitmap corresponds to an NES SCell. For example, an ith bit indicates whether SSB transmission in an NES Scell i (SCellindex i) is requested, with a value of 1 means yes, a value of 0 means no; or a value of 1 means no, a value of 0 means yes. For example, the RRC signaling can directly include an identifier (SCellindex) of an NES SCell and/or an SSB request indication for the NES SCell, indicating to the network device that the SSB of the SCell associated with the SCellindex is requested. The RRC signaling may be a newly defined RRC signaling or a dedicated SIB request.

For example, the terminal receives an SCell activation/deactivation MAC CE, which indicates activation of an SCell associated with SCellindex i. The terminal indicates to the network device through the second indication information that SSB transmission in the "activated SCell i" is requested. Before sending the second indication information, the terminal first detects whether the SSB is sent in the "activated SCell i".

For example, the terminal needs to perform time-frequency synchronization with an SCell, and the terminal indicates to the network device through the second indication information that SSB transmission in the SCell with which time-frequency synchronization is needed is requested. Before sending the second indication information, the terminal first detects whether the SSB is sent in the SCell with which time-frequency synchronization is needed.

For example, the terminal 101 needs to perform layer 1/layer 3 measurement on an SCell, and the measurement on the deactivated SCell is performed based on a long cycle configured by the network device. When/before a measurement occasion arrives, the terminal indicates to the network device through the second indication information that SSB transmission in the SCell on which layer 1/layer 3 measurement is needed is requested. Before sending the second indication information, the terminal first detects whether the SSB is sent in the SCell on which layer 1/layer 3 measurement is needed.

In some embodiments, the terminal requests the SSB transmission in the SCell through the first information. Before sending the first information, the terminal first detects whether the SSB is sent in the SCell.

For example, the first information may be a WUS signal, and the WUS signal may be used to send a preamble. The preamble may be a preamble reserved by the system, and the sending of the preamble indicates a request for the SSB.

For example, the terminal obtains a configuration of the WUS through a dedicated RRC signaling or an SIB, and the configuration of the WUS includes for example, but is not limited to, the following parameters: a preamble index or sequence reserved for UL WUS, and/or configuration information of a random access occasion (RO) resource for sending the WUS, an initial power for sending the WUS or a parameter for calculating an initial power for sending the WUS, a power increasing step size for the WUS, a maximum number of times the WUS is sent, a configuration of a timer, etc. In a possible implementation manner, more than one NES SCell is supported, the WUS configuration may be per NES SCell, each NES SCell has its own associated WUS configuration including but not limited to the above parameters, each NES SCell has an associated preamble index or sequence and/or configuration information of the RO resource, and the preamble is used to request SSB transmission in this NES Scell. Alternatively, multiple NES SCells share a set of configurations.

For example, after sending the WUS, the terminal detects the SSB sent in the SCell. If no SSB is received, the terminal continues to increase the power and send the WUS, until the SSB is received, or a maximum uplink transmission power of the terminal, a maximum uplink transmission power allowed by the cell or a maximum transmission number of the WUS is reached.

For example, after the terminal sends the WUS, if the terminal receives a header with the RAPID of the preamble transmitted by itself, it is considered that the random access is successfully completed. The terminal notifies a higher layer of the receipt of the SSB request acknowledgment.

For example, the SCell may be replaced with the NES cell.

In some embodiments, the network device indicates, through the first indication information, whether an SSB of an SCell is sent based on a request.

For example, the first indication information in an Scell addition RRC signaling indicates whether an Scell is a normal SCell or an on-demand required SSB SCell (or in other names, which are not specifically limited in the present disclosure), that is, it is used to indicate whether the Scell is an Scell of which an SSB is sent based on a request. For example, a new IE is defined in ServingCellConfigCommon/ ServingCellConfig/ SCellConfig to indicate whether the Scell is a normal SCell. For example, an SSBstate is defined with a value of "required", which indicates that the corresponding Scell is an Scell of which the SSB is sent based on a request. It should be noted that the above value of "required" is only an example, which may be implemented in other forms, and is not specifically limited in the present disclosure.

As another implementation manner, the terminal determines by itself whether an SSB of an SCell is sent based on a request. For example, if the terminal cannot detect the SSB in the SCell during SCell activation/SCell time-frequency synchronization/SCell measurement, the terminal determines that the SSB of the SCell is sent based on a request. The terminal continues to perform the above step of indicating to the network device that SSB transmission in the SCell is needed, or continues to perform the above step of requesting SSB transmission in the SCell through third indication information.

Embodiments of the present disclosure further provide an apparatus for implementing any of the above methods. For example, an apparatus is provided, and the apparatus includes one or more units or modules for implementing individual steps performed by a terminal as described in any of the above methods. For another example, another apparatus is provided, which includes one or more units or modules for implementing individual steps performed by a network device as described in any of the above methods.

It should be understood that the division of the units or modules in the above apparatuses is only a division of logical functions, and all or part of these units or modules may be integrated into one physical entity or may be physically separated as required in implementation. In addition, the units or modules in the apparatus may be implemented in the form of processor calling software: for example, the apparatus includes a processor, the processor is connected to a memory, instructions are stored in the memory, and the processor calls the instructions stored in the memory to implement any of the above methods or implement the functions of various units or modules of the above apparatus. The processor is, for example, a general-purpose processor, such as a central processing unit (CPU) or a microprocessor, and the memory is a memory inside or outside the apparatus. Alternatively, the units or modules in the apparatus may be implemented in the form of a hardware circuit, and the hardware circuit may be designed to implement the functions of some or all of the units or modules. The above hardware circuit may be understood as one or more processors. For example, in an implementation, the above hardware circuit is an application-specific integrated circuit (ASIC), and the functions of some or all of the above units or modules are realized by designing the logical relationship of components in the circuit. For example, in another implementation, the above hardware circuit may be realized by a programmable logic device (PLD). Taking a field programmable gate array (FPGA) as an example, it may include a large number of logic gate circuits, and the connection relationship between the logic gate circuits is configured by a configuration file, so as to realize the functions of some or all of the above units or modules. All units or modules of the above apparatus may be realized in the form of processor calling software or in the form of a hardware circuit, or a part of them may be realized in the form of processor calling software, and the rest may be realized in the form of a hardware circuit.

In embodiments of the present disclosure, the processor is a circuit with information processing capability. In an implementation, the processor may be a circuit with instruction reading and running capability, such as a central processing unit (CPU), a microprocessor, a graphics processing unit (GPU) (which may be understood as a microprocessor), or a digital signal processor (DSP), etc. In another implementation, the processor may realize certain functions through the logical relationship of hardware circuits, and the logical relationship of the hardware circuits is fixed or reconfigurable. For example, the processor is a hardware circuit implemented by an application-specific integrated circuit (ASIC) or a programmable logic device (PLD), such as FPGA. In a reconfigurable hardware circuit, the processor loads a configuration file to implement the process of hardware circuit configuration, which may be understood as a process where the processor loads instructions to implement the functions of some or all of the above units or modules. In addition, it may also be a hardware circuit designed for artificial intelligence, which may be understood as an ASIC, such as a neural network processing unit (NPU), a tensor processing unit (TPU), a deep learning processing unit (DPU), etc.

FIG. 6A is a schematic block diagram of a terminal according to embodiments of the present disclosure. As shown in FIG. 6A, the terminal 6100 may include at least one of a transceiver module 6101 or a processing module 6102. In some embodiments, the processing module 6102 is configured to determine that a first secondary cell (SCell) is a cell of which a synchronization signal block (SSB) is requested on demand (on-demand SSB SCell), and the transceiver module 6101 is configured to request a network device to send the SSB in the first SCell.

In some embodiments, the processing module 6102 is specifically configured to: determine, based on implementation of the terminal, that the first SCell is the on-demand SSB SCell.

In a possible implementation manner, it is determined that the first SCell is the on-demand SSB SCell, in a case where the SSB of the first SCell is not detected at a reception occasion of the SSB of the first SCell.

In some embodiments, the transceiver module 6101 is further configured to receive first indication information sent by the network device, and the first indication information is configured to indicate whether the first SCell is the on-demand SSB SCell. The processing module 6102 is specifically configured to determine, according to the first indication information, that the first SCell is the on-demand SSB SCell.

In some embodiments, the first indication information is a newly defined information element (IE), and the first indication information is included in one of: a serving cell common configuration (ServingCellConfigCommon); a serving cell configuration (ServingCellConfig); or an SCell configuration (ScellConfig).

In some embodiments, the transceiver module 6101 is further configured to send second indication information to the network device 102 via a second cell, the second indication information is configured to instruct the network device 102 to send the SSB in the first SCell; and the second cell and the first SCell are aggregated in carriers.

In some embodiments, the transceiver module 6101 is further configured to receive a first radio resource control (RRC) signaling sent by the network device 102 102, the first RRC signaling indicates at least one SCell. The transceiver module 6101 is specifically configured to: send the second indication information to the network device 102 via the second cell, in a case where the at least one SCell includes the first SCell.

In some embodiments, the first RRC signaling is an SCell addition and/or modification signaling.

In some embodiments, the second indication information is a second RRC signaling, the second RRC signaling includes respective identifiers of one or more SCells of the at least one SCell and/or respective SSB request indications for the one or more SCells; and the one or more SCells include the first SCell.

In some embodiments, the second indication information is a MAC-CE. The MAC-CE includes a first bitmap indicating whether SSB transmission in a corresponding SCell is requested, the first bitmap includes one or more first indication bits, the one or more first indication bits each indicate whether SSB transmission in a respective SCell is requested, and the one or more first indication bits have a one-to-one correspondence with the at least one SCell. Alternatively, the MAC-CE includes a second bitmap indicating whether SSB transmission in one or more third cells is requested, the second bitmap includes one or more second indication bits, the one or more second indication bits each indicate whether SSB transmission in a respective third cell is requested, the one or more second indication bits have a one-to-one correspondence with the one or more third cells, the one or more third cells are one or more on-demand SSB SCells among the at least one SCell, and the one or more third cells include the first SCell.

In some embodiments, the transceiver module 6101 is further configured to receive an SCell activation/deactivation MAC CE sent by the network device 102, and the SCell activation/deactivation MAC CE includes, for each SCell of at least one SCell, an activation/deactivation indication bit. The transceiver module 6101 is specifically configured to send the second indication information to the network device 102 via the second cell, in a case where the at least one SCell includes the first SCell, and the first SCell is an activated SCell.

In some embodiments, the processing module 6102 is configured to determine that time-frequency synchronization with the first SCell is needed; and the transceiver module 6101 is configured to send the second indication information to the network device 102 via the second cell.

In some embodiments, the processing module 6102 is configured to determine that layer 1/layer 3 measurement on the first SCell is needed; and the transceiver module 6101 is configured to send the second indication information to the network device 102 via the second cell.

In some embodiments, the transceiver module 6101 is configured to send first information to the network device 102 in the first SCell, and the first information is configured to instruct the network device 102 to send the SSB in the first SCell.

In some embodiments, the transceiver module 6101 is configured to obtain a configuration of the first information associated with the first SCell from an SIB or a dedicated RRC signaling.

In some embodiments, the transceiver module 6101 is specifically configured to send the first information to the network device 102 according to the configuration of the first information associated with the first SCell.

In some embodiments, the configuration of the first information associated with the first SCell includes at least one of: an initial transmission power of the first information or a parameter for calculating an initial transmission power; a power increasing step size of the first information; a maximum number of times the first information is sent; a preamble index or sequence reserved for the first information; configuration information of a random access occasion (RO) resource for sending the first information; or a configuration of a timer, where the timer is configured to indicate a duration for which the terminal 101 monitors the SSB sent in the first SCell, and configured for the terminal 101 to determine whether to resend the first information.

In some embodiments, the transceiver module 6101 is further configured to receive a random access response MAC PDU including a header with an RAPID of the preamble index or sequence, and determine that the network device 102 acknowledge a request for the SSB in the first SCell.

Optionally, the transceiver module is configured to perform at least one of the communication steps like sending and/or receiving steps (for example, but not limited to, step S2102, step S2202, step S2303, step S2403) performed by the terminal 101 as described in any of the above methods, which will not be elaborated here. Optionally, the processing module is configured to perform at least one of other steps (for example, but not limited to, step S2101, step S2103, step S2201, step S2203, step S2302, step S2304, step S2402, step S2404) performed by the terminal 101 as described in any of the above methods, which will not be elaborated here.

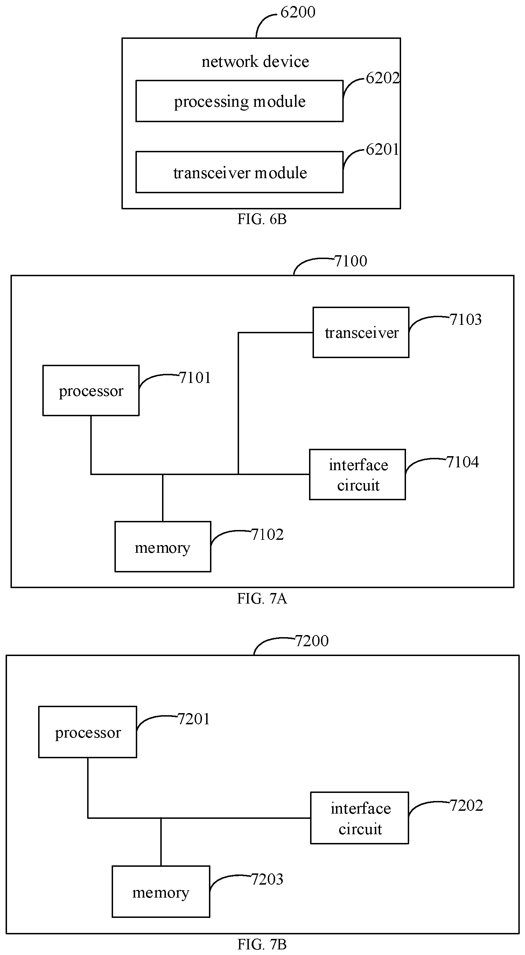

FIG. 6B is a schematic block diagram of a network device according to embodiments of the present disclosure. As shown in FIG. 6B, the network device 6200 may include at least one of a transceiver module 6201 or a processing module 6202. In some embodiments, the transceiver module 6201 is configured to receive second indication information sent by a terminal via a second cell, the second indication information is configured to instruct the network device to send a synchronization signal block (SSB) in a first secondary cell (SCell); the first SCell is a cell of which an SSB is requested on demand (on-demand SSB SCell); and the second cell and the first SCell are aggregated in carriers.

In some embodiments, the transceiver module 6201 is further configured to send a first RRC signaling, the first RRC signaling indicates at least one SCell, and the at least one SCell includes the first SCell. In some embodiments, the first RRC signaling is an SCell addition and/or modification signaling.

In some embodiments, the second indication information is a second RRC signaling, the second RRC signaling includes respective identifiers of one or more SCells of the at least one SCell and/or respective SSB request indications for the one or more SCells; and the one or more SCells include the first SCell.

In some embodiments, the first SCell is an added and/or modified SCell, and the second indication information is a media access control-control element (MAC-CE). The MAC-CE includes a first bitmap indicating whether SSB transmission in a corresponding SCell is requested, the first bitmap includes one or more first indication bits, the one or more first indication bits each indicate whether SSB transmission in a respective SCell is requested, and the one or more first indication bits have a one-to-one correspondence with the at least one SCell. Alternatively, the MAC-CE includes a second bitmap indicating whether SSB transmission in one or more third cells is requested, the second bitmap includes one or more second indication bits, the one or more second indication bits each indicate whether SSB transmission in a respective third cell is requested, the one or more second indication bits have a one-to-one correspondence with the one or more third cells, the one or more third cells are one or more on-demand SSB SCells among the at least one SCell, and the one or more third cells include the first SCell.

In some embodiments, the transceiver module 6201 is further configured to send an SCell activation/deactivation MAC CE, the SCell activation/deactivation MAC CE includes, for each SCell of at least one SCell, an activation/deactivation indication bit; and the at least one SCell includes the first SCell.

In some embodiments, the first SCell associated in the second indication information is an SCell with which time-frequency synchronization is needed.

In some embodiments, the first SCell associated in the second indication information is an SCell on which layer 1/layer 3 measurement is needed.

In some embodiments, the transceiver module 6201 is further configured to send first indication information to the terminal 101, the first indication information is configured to indicate whether the first SCell is the on-demand SSB SCell; the first indication information is configured for the terminal to determine that the first SCell is the on-demand SSB SCell.

In some embodiments, the first indication information is a newly defined information element (IE), and the first indication information is included in one of: a serving cell common configuration (ServingCellConfigCommon); a serving cell configuration (ServingCellConfig); or an SCell configuration (ScellConfig).

In some embodiments, the transceiver module 6201 is further configured to receive first information sent by a terminal in a first secondary cell (SCell), the first information is configured to instruct the network device to send a synchronization signal block (SSB) in the first SCell; and the first SCell is a cell of which an SSB is requested on demand (on-demand SSB SCell).

In some embodiments, the transceiver module 6201 is further configured to send an SIB or a dedicated RRC signaling, the SIB or the dedicated RRC signaling includes a configuration of the first information associated with the first SCell. The configuration of the first information associated with the first SCell may be used by the terminal 101 to send the first information to the network device 102 in the first SCell according to the configuration, to instruct the network device 102 to send the SSB in the first SCell.

In some embodiments, the configuration of the first information associated with the first SCell includes at least one of: an initial transmission power of the first information or a parameter for calculating an initial transmission power; a power increasing step size of the first information; a maximum number of times the first information is sent; a preamble index or sequence reserved for the first information; configuration information of a random access occasion (RO) resource for sending the first information; or a configuration of a timer, where the timer is configured to indicate a duration for which the terminal 101 monitors the SSB sent in the first SCell, and configured for the terminal 101 to determine whether to resend the first information.

In some embodiments, the transceiver module 6201 is further configured to send a random access response media access control protocol data unit (MAC PDU) to the terminal 101, and the random access response MAC PDU includes a header with a random access preamble identifier (RAPID) of the preamble index or sequence.

Optionally, the transceiver module is configured to perform at least one of the communication steps like sending and/or receiving steps (for example, but not limited to, the step S2104, the step S2204, the step S2301, the step S2305, the step S2401, and the step S2405) performed by the network device 102 as described in any of the above methods, which will not be elaborated here. Optionally, the processing module is configured to perform at least one of other steps performed by the network device 102 as described in any of the above methods, which will not be elaborated here.

In some embodiments, the transceiver module may include a sending module and/or a receiving module, and the sending module and the receiving module may be separate or integrated. Optionally, the transceiver module may be interchangeable with the transceiver.

In some embodiments, the processing module may be a single module or may include multiple sub-modules. Optionally, the multiple sub-modules perform all or part of the steps required to be performed by the processing module, respectively. Optionally, the processing module is interchangeable with a processor.

FIG. 7A is a schematic block diagram of a communication device 7100 according to embodiments of the present disclosure. The communication device 7100 may be a network device (e.g., an access network device, a core network device, etc.); a terminal (e.g., a user equipment, etc.); a chip, chip system or processor that supports a network device to implement any of the above methods; or a chip, chip system or processor that supports a terminal to implement any of the above methods. The communication device 7100 may be configured to implement the method described in the above method embodiments, and for details, reference may be made to the description in the above method embodiments.

As shown in FIG. 7A, the communication device 7100 includes one or more processors 7101. The processor 7101 may be a general-purpose processor or a dedicated processor, etc. For example, the processor 7101 may be a baseband processor or a central processing unit. The baseband processor may be configured to process the communication protocol and the communication data, and the central processing unit may be configured to control the communication device (such as a base station, a baseband chip, a terminal, a terminal chip, a DU or a CU, etc.), execute a program, and process the data of the program. Optionally, the communication device 7100 is configured to perform any of the above methods. Optionally, one or more processors 7101 are configured to call instructions to cause the communication device 7100 to perform any of the above methods.

In some embodiments, the communication device 7100 further includes one or more transceivers 7103. In the case where the communication device 7100 includes one or more transceivers 7103, the one or more transceivers 7103 perform at least one of the communication steps including sending and/or receiving steps (for example, but not limited to, the steps S2102, S2202, S2303, S2403, S2104, S2204, S2301, S2305, S2401, S2405) as described in the above methods, and the processor 7101 performs at least one of other steps (for example, but not limited to, the steps S2101, S2103, S2201, S2203, S2302, S2304, S2402, S2404). In optional embodiments, the transceiver may include a receiver and/or a transmitter, and the receiver and the transmitter may be separate or integrated together. Optionally, terms such as transceiver, transceiver unit, transceiver machine, transceiver circuit, interface circuit, interface, etc. are interchangeable, terms such as transmitter, transmitting unit, transmitting machine, transmitting circuit, etc. are interchangeable, and terms such as receiver, receiving unit, receiving machine, receiving circuit, etc. are interchangeable.

In some embodiments, the communication device 7100 further includes one or more memories 7102 for storing data. Optionally, all or part of the one or more memories 7102 may also be set outside the communication device 7100. In optional embodiments, the communication device 7100 may include one or more interface circuits 7104. Optionally, the interface circuit 7104 is connected to the memory 7102, and may be used to receive data from the memory 7102 or other devices, and may be used to send data to the memory 7102 or other devices. For example, the interface circuit 7104 may read data stored in the memory 7102 and send the data to the processor 7101.

The communication device 7100 described in the above embodiments may be a network device or a terminal, but the scope of the communication device 7100 described in the present disclosure is not limited thereto, and the structure of the communication device 7100 may not be limited by FIG. 7A. The communication device may be a stand-alone device or may be a part of a larger device. For example, the communication device may be: 1) a stand-alone integrated circuit (IC), a chip, or a chip system or subsystem; (2) a set of one or more ICs, optionally, the set of one or more ICs may also include a storage component for storing data or programs; (3) an ASIC, such as a Modem; (4) a module that may be embedded in other devices; (5) a receiver, a terminal, an intelligent terminal, a cellular phone, a wireless device, a handheld machine, a mobile unit, a vehicle-mounted device, a network device, a cloud device, an artificial intelligence device, etc.; (9) others.

FIG. 7B is a schematic block diagram of a chip 7200 according to embodiments of the present disclosure. For the case where the communication device 7100 may be a chip or chip system, reference may be made to the schematic block diagram of the chip 7200 shown in FIG. 7B, but the present disclosure is not limited thereto.

The chip 7200 includes one or more processors 7201. The chip 7200 is configured to perform any of the above methods.

In some embodiments, the chip 7200 further includes one or more interface circuits 7202. Optionally, terms such as interface circuit, interface, transceiver pin, etc. are interchangeable. In some embodiments, the chip 7200 also includes one or more memories 7203 for storing data. Optionally, all or part of the one or more memories 7203 may be set outside the chip 7200. Optionally, the interface circuit 7202 is connected to the memory 7203, and the interface circuit 7202 may be used to receive data from the memory 7203 or other devices, and may also be used to send data to the memory 7203 or other devices. For example, the interface circuit 7202 may read data stored in the memory 7203 and send the data to the processor 7201.

In some embodiments, the interface circuit 7202 performs at least one of the communication steps including sending and/or receiving steps (for example, but not limited to, the steps S2102, S2202, S2303, S2403, S2104, S2204, S2301, S2305, S2401, S2405) as described in the above methods. The interface circuit 7202 performs at least one of the communication steps including sending and/or receiving steps as described in the above methods, which for example refers to that the interface circuit 7202 performs interactions of data among the processor 7201, the chip 7200, the memory 7203 or a transceiver component. In some embodiments, the processor 7201 performs at least one of other steps (such as, but not limited to, the steps S2101, S2103, S2201, S2203, S2302, S2304, S2402, S2404).

The present disclosure also provides a storage medium having stored therein instructions that, when run on a communication device 7100, cause the communication device 7100 to perform any of the above methods. Optionally, the storage medium is an electronic storage medium. Optionally, the storage medium is a computer-readable storage medium, but is not limited thereto, and it may also be a storage medium readable by other devices. Optionally, the storage medium may be a non-transitory storage medium, but is not limited thereto, and it may also be a temporary storage medium.

The present disclosure also provides a program product that, when executed by a communication device 7100, causes the communication device 7100 to perform any of the above methods. Optionally, the program product is a computer program product.

The present disclosure also provides a computer program that, when run on a computer, causes the computer to perform any one of the above methods.

The above embodiments may be implemented in whole or in part by software, hardware, firmware or any combination thereof. When implemented using software, the above embodiments may be implemented in whole or in part in the form of the computer program product. The computer program product includes one or more computer programs. When the computer program is loaded and executed on the computer, all or part of the processes or functions according to embodiments of the present disclosure will be generated. The computer may be a general purpose computer, a special purpose computer, a computer network, or other programmable devices. The computer program may be stored in a computer-readable storage medium or transmitted from one computer-readable storage medium to another computer-readable storage medium. For example, the computer program may be transmitted from one website site, computer, server or data center to another website site, computer, server or data center in a wired manner (such as via a coaxial cable, an optical fiber, a digital subscriber line (DSL)) or a wireless manner (such as via infrared, wireless, or microwave, etc.). The computer-readable storage medium may be any available medium that can be accessed by the computer, or a data storage device such as a server or a data center integrated by one or more available media. The available medium may be a magnetic medium (for example, a floppy disk, a hard disk, or a magnetic tape), an optical medium (for example, a high-density digital video disc (DVD)), or a semiconductor medium (for example, a solid state disk (SSD)) etc.

Those of ordinary skill in the art can appreciate that the units and algorithm steps of various examples described in conjunction with embodiments disclosed herein may be implemented by electronic hardware, or a combination of computer software and electronic hardware. Whether these functions are executed by hardware or software depends on the specific applications and design constraints of the technical solution. For each particular application, those skilled in the art may use different methods to implement the described functions, but such implementation should not be considered beyond the scope of the present disclosure.

Those skilled in the art can clearly understand that for the convenience and brevity of the description, the specific working process of the above-described system, apparatus and unit may refer to the corresponding process in the foregoing method embodiments, which will not be repeated here.

The above describes some embodiments of the present disclosure, but the protection scope of the present disclosure is not limited thereto. Any changes or substitutions that are conceivable to those skilled in the art within the technical scope of the present disclosure should fall within the protection scope of the present disclosure. Therefore, the protection scope of the present disclosure should be determined by the protection scope of the claims.

## Claims

1. A communication method, performed by a terminal, comprising:
determining that a first secondary cell (SCell) is a cell of which a synchronization signal block (SSB) is requested on demand (on-demand SSB SCell); and
requesting a network device to send the SSB in the first SCell.

2. The method according to claim 1, wherein determining that the first SCell is the on-demand SSB SCell comprises:
determining, based on implementation of the terminal, that the first SCell is the on-demand SSB SCell.

3. The method according to claim 2, wherein determining, based on implementation of the terminal, that the first SCell is the on-demand SSB SCell comprises:
determining that the first SCell is the on-demand SSB SCell, in a case where the SSB of the first SCell is not detected at a reception occasion of the SSB of the first SCell.

4. The method according to claim 1, wherein determining that the first SCell is the on-demand SSB SCell comprises:
receiving first indication information sent by the network device, wherein the first indication information is configured to indicate whether the first SCell is the on-demand SSB SCell; and
determining, according to the first indication information, that the first SCell is the on-demand SSB SCell.

5. The method according to claim 4, wherein the first indication information is a newly defined information element (IE), and the first indication information is comprised in one of:
a serving cell common configuration (ServingCellConfigCommon);
a serving cell configuration (ServingCellConfig); or
an SCell configuration (ScellConfig).

6. The method according to claim 1, wherein requesting the network device to send the SSB in the first SCell comprises:
sending second indication information to the network device via a second cell,
wherein the second indication information is configured to instruct the network device to send the SSB in the first SCell; and
the second cell and the first SCell are aggregated in carriers.

7. The method according to claim 6, further comprising:
receiving a first radio resource control (RRC) signaling sent by the network device, wherein the first RRC signaling indicates at least one SCell;
wherein sending the second indication information to the network device via the second cell comprises:
sending the second indication information to the network device via the second cell, in a case where the at least one SCell comprises the first SCell.

8. The method according to claim 7, wherein the first RRC signaling is an SCell addition and/or modification signaling.

9. The method according to claim 7 or 8, wherein the second indication information is a second RRC signaling, the second RRC signaling comprises respective identifiers of one or more SCells and/or respective SSB request indications for the one or more SCells; the one or more SCells are comprised in the at least one SCell; and the one or more SCells comprise the first SCell.

10. The method according to claim 7 or 8, wherein the second indication information is a media access control-control element (MAC-CE);
wherein the MAC-CE comprises a first bitmap indicating whether SSB transmission in a corresponding SCell is requested, the first bitmap comprises one or more first indication bits, the one or more first indication bits each indicate whether SSB transmission in a respective SCell is requested, and the one or more first indication bits have a one-to-one correspondence with the at least one SCell; or
the MAC-CE comprises a second bitmap indicating whether SSB transmission in one or more third cells is requested, the second bitmap comprises one or more second indication bits, the one or more second indication bits each indicate whether SSB transmission in a respective third cell is requested, the one or more second indication bits have a one-to-one correspondence with the one or more third cells, the one or more third cells are one or more on-demand SSB SCells among the at least one SCell, and the one or more third cells comprise the first SCell.

11. The method according to claim 6, further comprising:
receiving an SCell activation/deactivation MAC CE sent by the network device, wherein the SCell activation/deactivation MAC CE comprises, for each SCell of at least one SCell, an activation/deactivation indication bit;
wherein sending the second indication information to the network device via the second cell comprises:
sending the second indication information to the network device via the second cell, in a case where the at least one SCell comprises the first SCell, and the first SCell is an activated SCell.

12. The method according to claim 6, wherein sending the second indication information to the network device via the second cell comprises:
determining that time-frequency synchronization with the first SCell is needed; and
sending the second indication information to the network device via the second cell.

13. The method according to claim 6, wherein sending the second indication information to the network device via the second cell comprises:
determining that layer 1/layer 3 measurement on the first SCell is needed; and
sending the second indication information to the network device via the second cell.

14. The method according to claim 1, wherein requesting the network device to send the SSB in the first SCell comprises:
sending first information to the network device in the first SCell, wherein the first information is configured to instruct the network device to send the SSB in the first SCell.

15. The method according to claim 14, further comprising:
obtaining a configuration of the first information associated with the first SCell from a system information block (SIB) or a dedicated radio resource control (RRC) signaling.

16. The method according to claim 15, wherein sending the first information to the network device comprises:
sending the first information to the network device according to the configuration of the first information associated with the first SCell.

17. The method according to claim 15 or 16, wherein the configuration of the first information associated with the first SCell comprises at least one of:
an initial transmission power of the first information or a parameter for calculating an initial transmission power;
a power increasing step size of the first information;
a maximum number of times the first information is sent;
a preamble index or sequence reserved for the first information;
configuration information of a random access occasion (RO) resource for sending the first information; or
a configuration of a timer, wherein the timer is configured to indicate a duration for which the terminal monitors the SSB sent in the first SCell, and configured for the terminal to determine whether to resend the first information.

18. The method according to claim 17, further comprising:
receiving a random access response media access control protocol data unit (MAC PDU) comprising a header with a random access preamble identifier (RAPID) of the preamble index or sequence, and determining that the network device acknowledges a request for the SSB in the first SCell.

19. A communication method, performed by a network device, comprising:
receiving second indication information sent by a terminal via a second cell, wherein the second indication information is configured to instruct the network device to send a synchronization signal block (SSB) in a first secondary cell (SCell); and the first SCell is a cell of which an SSB is requested on demand (on-demand SSB SCell);
wherein the second cell and the first SCell are aggregated in carriers.

20. The method according to claim 19, further comprising:
sending a first radio resource control (RRC) signaling, wherein the first RRC signaling indicates at least one SCell, and the at least one SCell comprises the first SCell.

21. The method according to claim 20, wherein the first RRC signaling is an SCell addition and/or modification signaling.

22. The method according to claim 20 or 21, wherein the second indication information is a second RRC signaling, the second RRC signaling comprises respective identifiers of one or more SCells and/or respective SSB request indications for the one or more SCells; the one or more SCells are comprised in the at least one SCell; and the one or more SCells comprise the first SCell.

23. The method according to claim 20 or 21, wherein the first SCell is an added and/or modified SCell, and the second indication information is a media access control-control element (MAC-CE);
wherein the MAC-CE comprises a first bitmap indicating whether SSB transmission in a corresponding SCell is requested, the first bitmap comprises one or more first indication bits, the one or more first indication bits each indicate whether SSB transmission in a respective SCell is requested, and the one or more first indication bits have a one-to-one correspondence with the at least one SCell; or
the MAC-CE comprises a second bitmap indicating whether SSB transmission in one or more third cells is requested, the second bitmap comprises one or more second indication bits, the one or more second indication bits each indicate whether SSB transmission in a respective third cell is requested, the one or more second indication bits have a one-to-one correspondence with the one or more third cells, the one or more third cells are one or more on-demand SSB SCells among the at least one SCell, and the one or more third cells comprise the first SCell.

24. The method according to claim 19, further comprising:
sending an SCell activation/deactivation MAC CE,
wherein the SCell activation/deactivation MAC CE comprises, for each SCell of at least one SCell, an activation/deactivation indication bit; and the at least one SCell comprises the first SCell.

25. The method according to claim 19, wherein
the first SCell associated in the second indication information is an SCell with which time-frequency synchronization is needed; or
the first SCell associated in the second indication information is an SCell on which layer 1/layer 3 measurement is needed.

26. The method according to any one of claims 19 to 25, further comprising:
sending first indication information to the terminal, wherein the first indication information is configured to indicate whether the first SCell is the on-demand SSB SCell;
wherein the first indication information is configured for the terminal to determine that the first SCell is the on-demand SSB SCell.

27. The method according to claim 26, wherein the first indication information is a newly defined information element (IE), and the first indication information is comprised in one of:
a serving cell common configuration (ServingCellConfigCommon);
a serving cell configuration (ServingCellConfig); or
an SCell configuration (ScellConfig).

28. A communication method, performed by a network device, comprising:
receiving first information sent by a terminal in a first secondary cell (SCell), wherein the first information is configured to instruct the network device to send a synchronization signal block (SSB) in the first SCell; and the first SCell is a cell of which an SSB is requested on demand (on-demand SSB SCell).

29. The method according to claim 28, further comprising:
sending a system information block (SIB) or a dedicated radio resource control (RRC) signaling, wherein the SIB or the dedicated RRC signaling comprises a configuration of the first information associated with the first SCell.

30. The method according to claim 29, wherein the configuration of the first information associated with the first SCell comprises at least one of:
an initial transmission power of the first information or a parameter for calculating an initial transmission power;
a power increasing step size of the first information;
a maximum number of times the first information is sent;
a preamble index or sequence reserved for the first information;
configuration information of a random access occasion (RO) resource for sending the first information; or
a configuration of a timer, wherein the timer is configured to indicate a duration for which the terminal monitors the SSB sent in the first SCell, and configured for the terminal to determine whether to resend the first information.

31. The method according to claim 30, further comprising:
sending a random access response media access control protocol data unit (MAC PDU) to the terminal, wherein the random access response MAC PDU comprises a header with a random access preamble identifier (RAPID) of the preamble index or sequence.

32. A terminal, comprising:
a processing module, configured to determine that a first secondary cell (SCell) is a cell of which a synchronization signal block (SSB) is requested on demand (on-demand SSB SCell); and
a transceiver module, configured to request a network device to send the SSB in the first SCell.

33. A network device, comprising:
a transceiver module, configured to receive second indication information sent by a terminal via a second cell, wherein the second indication information is configured to instruct the network device to send a synchronization signal block (SSB) in a first secondary cell (SCell); and the first SCell is a cell of which an SSB is requested on demand (on-demand SSB SCell);
wherein the second cell and the first SCell are aggregated in carriers.

34. A network device, comprising:
a transceiver module, configured to receive first information sent by a terminal in a first secondary cell (SCell), wherein the first information is configured to instruct the network device to send a synchronization signal block (SSB) in the first SCell; and the first SCell is a cell of which an SSB is requested on demand (on-demand SSB SCell).

35. A communication system, comprising:
a terminal, configured to perform the communication method according to any one of claims 1 to 18; and
a network device, configured to perform the communication method according to any one of claims 19 to 27 and claims 28 to 31.

36. A communication device, comprising:
one or more processors;
wherein the communication device is configured to perform the communication method according to any one of claims 1 to 18.

37. A communication device, comprising:
one or more processors;
wherein the communication device is configured to perform the communication method according to any one of claims 19 to 27 and claims 28 to 31.

38. A storage medium, having stored therein instructions that, when run on a communication device, cause the communication device to perform the communication method according to any one of claims 1 to 18, claims 19 to 27, and claims 28 to 31.
